# EUROPEAN PATENT APPLICATION

(11) **EP 4 629 402 A1**
(43) Date of publication of application: **08.10.2025**
(21) Application number: 23938767.3
(22) Date of filing: 29.05.2023
(51) Int. Cl.: H01M 10/635, H01M 10/633, H01M 10/617

(54) **TEMPERATURE CONTROL METHOD AND APPARATUS FOR BATTERY SYSTEM, AND BATTERY SYSTEM**

(71) Applicant: Contemporary Amperex Technology Co., Limited, Ningde, Fujian 352100 (CN)
(72) Inventor: WANG, Yafei, Ningde, Fujian 352100 (CN); ZUO, Xiyang, Ningde, Fujian 352100 (CN); LUO, Guangsheng, Ningde, Fujian 352100 (CN); LI, Zhonghong, Ningde, Fujian 352100 (CN); XU, Jinmei, Ningde, Fujian 352100 (CN); WU, Kai, Ningde, Fujian 352100 (CN)
(74) Representative: Ziebig Hengelhaupt Intellectual Property Attorneys Patentanwaltskanzlei PartGmbB
(86) International application number: PCT/CN2023/096781
(87) International publication number: WO 2024/243769

(57) **Abstract**

Embodiments of the present application provide a temperature control method and apparatus for a battery system, and a battery system. The temperature control method for a battery system includes: acquiring the temperature of each of a plurality of battery clusters of the battery system; and determining a target battery cluster among the plurality of battery clusters according to the temperature of each battery cluster. By means of the technical solution, temperature control is performed on the target battery cluster among the plurality of battery clusters in a targeted manner, thereby facilitating improvement of temperature uniformity among the plurality of battery clusters where the target battery cluster is located, solving the problem of non-uniform impedance and current of battery clusters caused by inconsistent temperatures among the clusters, reducing the situation in which a battery cluster is fully charged or discharged in advance in the charging process, improving the energy conversion efficiency of the battery system, and improving the operation performance of the battery system where the plurality of battery clusters are located.

## Description

### TECHNCIAL FIELD

Embodiments of the present application relate to the field of batteries, and more specifically relate to a temperature control method and apparatus for a battery system, and a battery system.

### BACKGROUND

With the rapid development of energy technology, batteries have become an indispensable part in people life. In some scenarios, a plurality of batteries can be connected in series and parallel with each other to form a battery system for use in energy storage systems or power systems. When the battery is overcharged or works at high current for a long time, the temperature of the battery will rise, which affects the normal charging and discharging performance of the battery, and in more serious cases, thermal runaway may occur and cause safety problems. When the plurality of batteries are arranged in close proximity to each other in a battery system, the heat of the battery is easily diffused, which causes thermal runaway of other batteries, and this chain reaction will greatly increase the risk of failure of the battery system.

In view of this, how to effectively control the temperature of the battery system to improve the performance of the battery system is a technical problem that is to be solved urgently.

### SUMMARY OF THE INVENTION

Embodiments of the present application provide a temperature control method and apparatus for a battery system, and a battery system, aiming to perform effective temperature control on the battery system to improve the performance of the battery system.

In a first aspect, provided is a temperature control method for a battery system, which includes: acquiring the temperature of each of a plurality of battery clusters of the battery system; determining a target battery cluster among the plurality of battery clusters according to the temperature of each battery cluster; and performing temperature control on the target battery cluster.

According to the technical solution of the embodiments of the present application, the temperature of each battery cluster in the battery system is acquired, the temperature can represent the overall temperature condition of each battery cluster, and then the target battery cluster among the plurality of battery clusters is further determined according to the temperature of each battery cluster, and temperature control is performed on the target battery cluster, thereby facilitating improvement of temperature uniformity among the plurality of battery clusters where the target battery cluster is located, solving the problem of non-uniform impedance and current of each battery cluster caused by inconsistent temperature among the clusters, reducing the situation in which the battery cluster is fully charged or discharged in advance in the charging process, improving the energy conversion efficiency of the battery system, and improving the operation performance of the battery system where the plurality of battery clusters are located.

In some possible embodiments, the target battery cluster includes: high-temperature battery clusters and/or low-temperature battery clusters, in which, the difference between the temperature of the high-temperature battery clusters and the first target temperature of the plurality of battery clusters meets a first preset condition, the difference between the temperature of the low-temperature battery clusters and the second target temperature of the plurality of battery clusters meets a second preset condition, the first target temperature is any one selected from the group consisting of the following temperature: the maximum value, the minimum value or the mean value of the temperature of the plurality of battery clusters, and the second target temperature is any one selected from the group consisting of the following temperature: the maximum value, the minimum value or the mean value of the temperature of the plurality of battery clusters.

According to the technical solution of the embodiments, the temperature control is performed on the high-temperature battery clusters and/or the low-temperature target battery clusters in the plurality of battery clusters, which is conducive to reducing the loss of the service lives of the batteries caused by too high or too low temperature, further optimizing the temperature uniformity among the plurality of battery clusters, and further comprehensively prolonging the service life and improving the operation performance of the battery system where the plurality of battery clusters are located.

In some possible embodiments, the performing temperature control on the target battery cluster includes: performing temperature decrease regulation on the high-temperature battery clusters under the condition that the number of the high-temperature battery clusters is less than the number of the low-temperature battery clusters; or, performing temperature rise regulation on the low-temperature battery clusters or not performing temperature regulation on the low-temperature battery clusters under the condition that the number of the low-temperature battery clusters is less than or equal to the number of the high-temperature battery clusters.

According to the technical solution of the embodiments, when there are few high-temperature battery clusters in the plurality of battery clusters, namely, the phenomenon of "high-temperature outliers" occurs, the high-temperature battery clusters will be subjected to temperature regulation, and correspondingly, when there are few low-temperature battery clusters in the plurality of battery clusters, namely, the phenomenon of "low-temperature outliers" occurs, the low-temperature battery clusters will be subjected to temperature regulation. By means of the technical solution, the temperature regulation efficiency of the battery system where the plurality of battery clusters are located can be improved, the temperature difference among the plurality of battery clusters can be quickly regulated, thereby improving the overall performance of the battery system. When the phenomenon of "low-temperature outliers" occurs, the low-temperature battery clusters can be not subjected to temperature regulation, the temperature of the low-temperature battery clusters is increased by heat generated by the low-temperature battery clusters in the operation process, and in this way, the overall power consumption of the battery system can be saved.

In some possible embodiments, the performing temperature decrease regulation on the high-temperature battery clusters includes: controlling the target regulation temperature of a temperature regulation apparatus corresponding to the high-temperature battery clusters to be the minimum value of the mean temperature of the plurality of battery clusters, the temperature regulation apparatus corresponding to the high-temperature battery clusters being configured to perform temperature decrease regulation on the high-temperature battery clusters; or, the performing temperature rise regulation on the low-temperature battery clusters includes: controlling the target regulation temperature of a temperature regulation apparatus corresponding to the low-temperature battery clusters to be the maximum value of the temperature of the plurality of battery clusters, the temperature regulation apparatus corresponding to the low-temperature battery clusters being configured to perform temperature rise regulation on the low-temperature battery clusters.

In some possible embodiments, the temperature regulation apparatus corresponding to the high-temperature battery clusters is configured to perform temperature decrease regulation on the high-temperature battery clusters so as to make the difference between the mean temperature of the high-temperature battery cluster and the minimum value of the mean temperature of the plurality of battery clusters within a first preset range; or, the temperature regulation apparatus corresponding to the low-temperature battery clusters is configured to perform temperature rise regulation on the low-temperature battery cluster so as to make the difference between the maximum value of the temperature of the plurality of battery clusters and the temperature of the low-temperature battery clusters within a second preset range.

By means of the technical solution of the above two embodiments, the target regulation temperature of the temperature regulation apparatus corresponding to the high-temperature battery clusters can be controlled to be the minimum value of the mean temperature of the plurality of battery clusters, and/or, the target regulation temperature of the temperature regulation apparatus corresponding to the high-temperature battery clusters is controlled to be the maximum value of the mean temperature of the plurality of battery clusters, so that effective temperature regulation on the high-temperature battery clusters and/or the low-temperature battery clusters can be realized, and the overall temperature regulation efficiency of the battery system is improved.

In some possible embodiments, the first preset range and/or the second preset range are/is between 0°C and 1°C.

By designing the first preset range and/or the second preset range, both the temperature regulation precision and the regulation efficiency can be taken into account, thus the temperature regulation effect of the high-temperature battery clusters and/or the low-temperature battery clusters can be effectively improved, and as a result, the overall performance of the battery system is improved.

In some possible embodiments, the temperature of each battery cluster includes the mean temperature of each battery cluster, and the mean temperature of each battery cluster is the temperature mean value of the batteries in each battery cluster.

According to the technical solution of the embodiment, the mean temperature of the battery clusters can accurately represent the temperature conditions of a plurality of batteries in the battery clusters, the target battery cluster among the plurality of battery clusters can be determined according to the mean temperature of the battery clusters, and temperature control can be performed on the target battery cluster, thereby improving the temperature control effect of the plurality of battery clusters.

In some possible embodiments, the temperature control method further includes: performing temperature control on each battery cluster according to the temperature of each battery cluster.

According to the technical solution of the embodiments, temperature control and regulation can be further performed on the plurality of battery clusters in the battery system, thus improving the temperature uniformity among the plurality of battery clusters, and further improving the operation performance of the battery system where the plurality of battery clusters are located.

In some possible embodiments, the temperature of each battery cluster includes the maximum temperature and/or the minimum temperature of each battery cluster, the maximum temperature of each battery cluster is the maximum temperature value of the batteries in each battery cluster, and the minimum temperature of each battery cluster is the minimum temperature value of the batteries in each battery cluster; and the performing temperature control on each battery cluster according to the temperature of each battery cluster includes: performing temperature control on each battery cluster according to the maximum temperature and/or the minimum temperature of each battery cluster.

According to the technical solution of the embodiments, temperature control cannot only be performed on the high-temperature battery clusters and/or the low-temperature battery clusters in the plurality of battery clusters, but also can be performed on each battery cluster according to the maximum temperature and/or the minimum temperature of each battery cluster, thereby further finely regulating the temperature of each battery cluster, and keeping high temperature uniformity among the batteries in each battery cluster.

In some possible embodiments, the performing temperature control on each battery cluster according to the maximum temperature and/or the minimum temperature of each battery cluster includes: performing temperature decrease regulation on a first battery cluster under the condition that the maximum temperature of the first battery cluster in the plurality of battery clusters is larger than a first preset value.

According to the technical solution of the embodiments, the first preset value is compared with the maximum temperature of the first battery cluster so as to control the temperature decrease regulation on the first battery cluster, the overall implementation mode is simple, and the control reliability is high.

In some possible embodiments, the performing temperature decrease regulation on the first battery cluster includes: acquiring regulation temperature of a first temperature regulation apparatus corresponding to the first battery cluster; and performing temperature decrease regulation on the first battery cluster according to the regulation temperature of the first temperature regulation apparatus.

According to the technical solution of the embodiments, on the basis of obtaining the maximum temperature of the first battery cluster, the regulation temperature of the first temperature regulation apparatus corresponding to the first battery cluster is further acquired, and the regulation temperature of the first temperature regulation apparatus is fully used in the temperature decrease regulation on the first battery cluster, thus the possibility of real-time operation of the first temperature regulation apparatus can be reduced, and the operation power consumption of the first temperature regulation apparatus is decreased.

In some possible embodiments, the performing temperature decrease regulation on the first battery cluster according to the regulation temperature of the first temperature regulation apparatus includes: under the condition that the regulation temperature of the first temperature regulation apparatus is larger than a first preset regulation value, controlling to decrease the regulation temperature of the first temperature regulation apparatus so as to perform temperature decrease regulation on the first battery cluster; or, under the condition that the regulation temperature of the first temperature regulation apparatus is less than or equal to the first preset regulation value, controlling the first temperature regulation apparatus to perform temperature decrease regulation on the first battery cluster according to the regulation temperature.

In some possible embodiments, the performing temperature control on each battery cluster according to the maximum temperature and/or the minimum temperature of each battery cluster includes: performing temperature rise regulation on the first battery cluster under the condition that the minimum temperature of the first battery cluster in the plurality of battery clusters is less than or equal to a second preset value.

According to the technical solution of the embodiments, the second preset value is compared with the minimum temperature of the first battery cluster so as to control the temperature rise regulation on the first battery cluster, the overall implementation mode is simple, and the control reliability is high.

In some possible embodiments, the performing temperature rise regulation on the first battery cluster includes: acquiring the regulation temperature of the first temperature regulation apparatus corresponding to the first battery cluster; and performing temperature rise regulation on the first battery cluster according to the regulation temperature of the first temperature regulation apparatus.

According to the technical solution of the embodiments, on the basis of acquiring the minimum temperature of the first battery cluster, the regulation temperature of the first temperature regulation apparatus corresponding to the first battery cluster is further acquired, and the regulation temperature of the first temperature regulation apparatus is fully used in temperature rise regulation on the first battery cluster, thus the possibility of real-time operation of the first temperature regulation apparatus can be reduced, and the operation power consumption of the first temperature regulation apparatus is decreased.

In some possible embodiments, the performing temperature rise regulation on the first battery cluster according to the regulation temperature of the first temperature regulation apparatus includes: under the condition that the regulation temperature of the first temperature regulation apparatus is less than or equal to a second preset regulation value, controlling to rise the regulation temperature of the first temperature regulation apparatus so as to perform temperature rise regulation on the first battery cluster; or, under the condition that the regulation temperature of the first temperature regulation apparatus is larger than the second preset regulation value, controlling the first temperature regulation apparatus to perform temperature rise regulation on the first battery cluster according to the regulation temperature.

In some possible embodiments, the performing temperature control on each battery cluster according to the maximum temperature and/or the minimum temperature of each battery cluster includes: under the condition that the difference between the maximum temperature and the minimum temperature of the first battery cluster in the plurality of battery clusters is larger than a third preset value, performing temperature regulation on the first battery cluster; or, under the condition that the difference between the maximum temperature and the minimum temperature of the first battery cluster in the plurality of battery clusters is less than or equal to the third preset value, stopping temperature regulation on the first battery cluster.

According to the technical solution of the embodiments, the maximum temperature and the minimum temperature of the first battery cluster can be acquired, and the temperature regulation mode for the first battery cluster is determined according to the difference between the maximum temperature and the minimum temperature, so that the temperature uniformity in the first battery cluster is further improved, and furthermore, the overall performance of the battery system can be improved.

In some possible embodiments, the temperature of each battery cluster includes: the mean temperature of each battery cluster, and the mean temperature of each battery cluster is the temperature mean value of the batteries in each battery cluster; and the performing temperature control on each battery cluster according to the temperature of each battery cluster includes: performing temperature control on each battery cluster according to the mean temperature of each battery cluster.

According to the technical solution of the embodiments, the mean temperature of each battery cluster can represent the overall temperature condition of each battery cluster, and further, the temperature control is performed on each battery cluster according to the mean temperature of each battery cluster, thus the temperature uniformity among the plurality of battery clusters in the battery system is realized, and further, the operation performance of the battery system where the plurality of battery clusters are located is improved.

In some possible embodiments, the performing temperature control on each battery cluster according to the mean temperature of each battery cluster includes: performing temperature control on each battery cluster according to the mean temperature of each battery cluster and a preset temperature range.

According to the technical solution of the embodiments, temperature control can be performed on each battery cluster according to the mean temperature and the preset temperature range of each battery cluster, which is conducive to controlling the mean temperature of each of the plurality of battery clusters to be within the preset temperature range, thereby further improving the temperature uniformity among the plurality of battery clusters.

In some possible embodiments, the performing temperature control on each battery cluster according to the mean temperature and the preset temperature range of each battery cluster includes: under the condition that the mean temperature of the first battery cluster in the plurality of battery clusters is larger than the maximum value in the preset temperature range, performing temperature decrease regulation on the first battery cluster so as to make the mean temperature of the first battery cluster within the preset temperature range; or, under the condition that the mean temperature of the first battery cluster in the plurality of battery clusters is less than the minimum value in the preset temperature range, performing temperature rise regulation on the first battery cluster so as to make the mean temperature of the first battery cluster within the preset temperature range.

In some possible embodiments, the performing temperature decrease regulation on the first battery cluster so as to make the mean temperature of the first battery cluster within the preset temperature range includes: controlling the regulation temperature of the first temperature regulation apparatus corresponding to the first battery cluster to be less than or equal to the maximum value in the preset temperature range, the first temperature regulation apparatus being configured to perform temperature decrease regulation on the first battery cluster so as to make the mean temperature of the first battery cluster within the preset temperature range; or, the performing temperature rise regulation on the first battery cluster so as to make the mean temperature of the first battery cluster within the preset temperature range includes: controlling the regulation temperature of the first temperature regulation apparatus corresponding to the first battery cluster to be larger than or equal to the minimum value in the preset temperature range, the first temperature regulation apparatus being configured to perform temperature rise regulation on the first battery cluster so as to make the mean temperature of the first battery cluster within the preset temperature range.

According to the technical solution of the embodiments, the minimum value or the maximum value in the preset temperature range can be directly used for regulating the regulation temperature of the first temperature regulation apparatus of the first battery cluster, the solution is easy to implement, and the temperature regulation efficiency and the regulation effect of the first temperature regulation apparatus on the first battery cluster can be improved.

In some possible embodiments, the performing temperature control on each battery cluster according to the mean temperature of each battery cluster includes: performing temperature control on each battery cluster according to the difference between the mean temperature of each battery cluster and the target mean temperature, in which, the target mean temperature is the maximum value, the minimum value or the mean value of the mean temperature of the plurality of battery clusters.

According to the technical solution of the embodiments, the target mean temperature determined based on the mean temperature of each of the plurality of battery clusters can change along with the overall change of the temperature of the plurality of battery clusters, so that the temperature control can be performed on each battery cluster according to the mean temperature of each battery cluster and the target mean temperature, which realize more accurate and effective temperature control on each battery cluster in the battery system, maintains the temperature uniformity among the clusters, and further improves the overall performance of the battery system.

In some possible embodiments, the performing temperature control on each battery cluster according to the difference between the mean temperature of each battery cluster and the target mean temperature includes: under the condition that the difference between the mean temperature of the first battery cluster in the plurality of battery clusters and the target mean temperature is within a third preset range, maintaining the current temperature of the first battery cluster; or, under the condition that the difference between the mean temperature of the first battery cluster in the plurality of battery clusters and the target mean temperature is beyond the third preset range, performing the temperature regulation on the first battery cluster.

According to the technical solution of the embodiments, temperature control or temperature maintenance on any battery cluster can be realized directly based on whether the difference between the temperature of any battery cluster (namely the first battery cluster) in the plurality of battery clusters and the target mean temperature is within the third preset range or not, so that the temperature difference among the plurality of battery clusters can be reduced; and the technical solution is easy to implement, and the reliability is high, and thus the overall performance of the battery system is further improved.

In some possible embodiments, the performing temperature regulation on the first battery cluster includes: controlling the regulation temperature of the first temperature regulation apparatus corresponding to the first battery cluster, the first temperature regulation apparatus being configured to perform temperature regulation on the first battery cluster.

According to the technical solution of the embodiments, the corresponding first temperature regulation apparatus is provided for the first battery cluster, and the first temperature regulation apparatus can be controlled to perform temperature regulation on the first battery cluster, so that the temperature control accuracy and effectiveness on the first battery cluster can be improved.

In some possible embodiments, the controlling the regulation temperature of the first temperature regulation apparatus corresponding to the first battery cluster, the first temperature regulation apparatus being configured to perform temperature regulation on the first battery cluster includes: controlling the regulation temperature of the first temperature regulation apparatus corresponding to the first battery cluster to be the target mean temperature, the first temperature regulation apparatus being configured to perform temperature regulation on the first battery cluster according to the target mean temperature.

According to the technical solution of the embodiments, the regulation temperature of the first temperature regulation apparatus corresponding to the first battery cluster can be controlled to be the target mean temperature, so that the first temperature regulation apparatus can perform effective and relatively accurate regulation on the temperature of the first battery cluster according to the target mean temperature, which makes the mean temperature of the first battery cluster stop to the target mean temperature and maintain within a certain threshold range, thereby effectively reducing the temperature difference between the first battery cluster and other battery clusters, and improving the overall performance of the battery system.

In some possible embodiments, the first target temperature is the minimum value of the temperature of the plurality of battery clusters, and the second target temperature is the maximum value of the temperature of the plurality of battery clusters; and the determining the target battery cluster among the plurality of battery clusters according to the temperature of each battery cluster includes: under the condition that the difference between the temperature of the first battery cluster in the plurality of battery clusters and the minimum value of the temperature of the plurality of battery clusters is larger than or equal to a first preset positive value to meet the first preset condition, determining the first battery cluster to be the target battery cluster, the target battery cluster being the high-temperature battery cluster; and/or, under the condition that the difference between the maximum value of the temperature of the plurality of battery clusters and the temperature of a second battery cluster in the plurality of battery clusters is larger than or equal to a second preset positive value to meet the second preset condition, determining the second battery cluster to be the target battery cluster, the target battery cluster being the low-temperature battery cluster.

In some possible embodiments, the first target temperature is the maximum value of the temperature of the plurality of battery clusters, and the second target temperature is the minimum value of the temperature of the plurality of battery clusters; and the determining the target battery cluster among the plurality of battery clusters according to the temperature of each battery cluster includes: under the condition that the difference between the maximum value of the temperature of the plurality of battery clusters and the temperature of the first battery cluster in the plurality of battery clusters is less than or equal to a third preset positive value to meet the first preset condition, determining the first battery cluster to be the target battery cluster, the target battery cluster being the high-temperature battery cluster; and/or, under the condition that the absolute value of the difference between the temperature of the second battery cluster in the plurality of battery clusters and the minimum value of the temperature of the plurality of battery clusters is less than or equal to a fourth preset positive value to meet the second preset condition, determining the second battery cluster to be the target battery cluster, the target battery cluster being the low-temperature battery cluster.

In some possible embodiments, the first target temperature and the second target temperature are both mean values of the temperature of the plurality of battery clusters; and the determining the target battery cluster among the plurality of battery clusters according to the temperature of each battery cluster includes: under the condition that the difference between the temperature of the first battery cluster in the plurality of battery clusters and the mean value of the temperature of the plurality of battery clusters is larger than or equal to a fifth preset nonnegative value to meet the first preset condition, determining the first battery cluster to be the target battery cluster, the target battery cluster being the high-temperature battery cluster; and/or, under the condition that the difference between the mean value of the temperature of the plurality of battery clusters and the temperature of the second battery cluster in the plurality of battery clusters is larger than or equal to a sixth preset nonnegative value to meet the second preset condition, determining the second battery cluster to be the target battery cluster, the target battery cluster being the low-temperature battery cluster.

According to the technical solution of the above three embodiments, the high-temperature battery clusters and/or the low-temperature battery clusters in the plurality of battery clusters can be determined according to the difference of the maximum value, the minimum value or the mean value of the temperature of the plurality of battery clusters and the temperature of the plurality of battery clusters respectively; the technical solution is easy to implement, and the reliability is high; and the high-temperature battery clusters with high temperature and the low-temperature battery clusters with low temperature in the plurality of battery clusters can be determined relatively accurately, so that the temperature control effectiveness on the high-temperature battery clusters and/or the low-temperature battery clusters is improved.

In some possible embodiments, before performing temperature control on the target battery cluster, the temperature control method further includes: acquiring electrical parameters of the plurality of battery clusters; and determining that the plurality of battery clusters are in charge or discharge state according to the electrical parameters.

According to the technical solution of the embodiments, the temperature control method for a battery system in the charging or discharging state is provided; and according to the temperature control method, under the condition that the plurality of battery clusters are in the charging or discharging state, the high-temperature battery clusters and/or the low-temperature battery clusters in the plurality of battery clusters can be determined according to the mean temperature of the plurality of battery clusters, and temperature control can be performed on the high-temperature battery clusters and/or the low-temperature battery clusters in a targeted manner, thereby being conductive to reducing the possibility of high temperature difference among the plurality of battery clusters in the charging and discharging process, and improving the charging and discharging performance of the battery system where the plurality of battery clusters are located.

In some possible embodiments, the temperature control method is applied to a BMS; and performing temperature control on the target battery cluster includes: the BMS transmitting a temperature control command to a temperature regulation system corresponding to the battery system, and then the temperature regulation system performing temperature control on the target battery cluster according to the temperature control command.

According to the technical solution of the embodiments, the BMS serves as a main management unit in the battery system, and can acquire multi-aspect information of the plurality of battery clusters in the battery system; the BMS is configured to control the temperature regulation apparatus to perform temperature control on the plurality of battery clusters; and the whole technical solution is easy to implement, the reliability is high, and the overall performance of the battery system can be comprehensively improved.

In some possible embodiments, the temperature regulation system contains a fluid which is used for regulating the temperature of the target battery cluster.

Under the condition that the temperature regulation apparatus is a liquid-cooled temperature regulation apparatus, the liquid-cooled temperature regulation apparatus can perform relatively uniform and effective temperature regulation on the plurality of battery clusters. Compared with a scene that an air-cooled temperature regulation apparatus (such as a fan) is poor in temperature regulation uniformity, the technical solution of the embodiments has the advantage that the temperature regulation effect on the plurality of battery clusters in the battery system can be further improved.

In a second aspect, provided is a temperature control apparatus for a battery system, and the temperature control apparatus includes: an acquisition unit configured to acquire the temperature of each of a plurality of battery clusters of the battery system; and a control unit configured to determine a target battery cluster among the plurality of battery clusters according to the temperature of each battery cluster, and perform temperature control on the target battery cluster.

In a third aspect, provided is a temperature control apparatus for a battery system, and the temperature control apparatus includes: a processor and a memory, the memory is configured to store a computer program, and the processor is configured to call and run the computer program stored in the memory to execute: the temperature control method for a battery system in the first aspect or in any possible embodiment in the first aspect.

In a fourth aspect, provided is a battery system, which includes: a plurality of battery clusters, and the temperature control apparatus in the second aspect or the third aspect; and the temperature control apparatus is configured to perform temperature control on the target battery cluster among the plurality of battery clusters.

In some possible embodiments, the battery system further includes: a temperature regulation apparatus; the temperature control apparatus is configured to transmit a temperature control command to the temperature regulation apparatus, so that the temperature regulation apparatus can control the temperature of a target battery cluster according to the temperature control command.

In a fifth aspect, provided is a computer-readable medium which is configured to store a computer program, and the computer program is used for implementing the temperature control method for a battery system in the first aspect or in any possible embodiment of the first aspect or the first aspect.

According to the technical solution of the embodiments of the present application, the temperature of each battery cluster in the battery system is acquired, the temperature can represent the overall temperature condition of each battery cluster, and then the target battery cluster among the plurality of battery clusters is further determined according to the temperature of each battery cluster, and temperature control is performed on the target battery cluster, thereby facilitating improvement of temperature uniformity among the plurality of battery clusters where the target battery cluster is located, solving the problem of non-uniform impedance and current of each battery cluster caused by inconsistent temperature among the clusters, reducing the situation in which the battery cluster is fully charged or discharged in advance in the charging process, improving the energy conversion efficiency of the battery system, and improving the operation performance of the battery system where the plurality of battery clusters are located.

### BRIEF DESCRIPTION OF THE DRAWINGS

In order to more clearly illustrate the technical solution of the embodiments of the present application, the drawings that need to be used in the embodiments of the present application will be briefly introduced below, and it is obvious that the drawings described below are only some embodiments of the present application, and for those skilled in the art, other drawings can also be obtained according to the drawings without paying creative labor.
FIG. 1 is a schematic structural block diagram of a system provided by an embodiment of the present application;
FIG. 2 is a schematic flow block diagram of one temperature control method for a battery system provided by an embodiment of the present application;
FIG. 3 is a schematic flow block diagram of another temperature control method for a battery system provided by an embodiment of the present application;
FIG. 4 is a schematic flow block diagram of another temperature control method for a battery system provided by an embodiment of the present application;
FIG. 5 is a schematic flow block diagram of another temperature control method for a battery system provided by an embodiment of the present application;
FIG. 6 is a schematic flow block diagram of another temperature control method for a battery system provided by an embodiment of the present application;
FIG. 7 is a schematic flow block diagram of another temperature control method for a battery system provided by an embodiment of the present application;
FIG. 8 is a schematic flow block diagram of another temperature control method for a battery system provided by an embodiment of the present application;
FIG. 9 is a schematic flow block diagram of one temperature control apparatus provided by an embodiment of the present application;
FIG. 10 is a schematic flow block diagram of another temperature control apparatus provided by an embodiment of the present application; and
FIG. 11 is a schematic flow block diagram of a battery system provided by an embodiment of the present application.

The accompanying drawings are not drawn to actual scale.

### DETAILED DESCRIPTION

Embodiments of the present application are described in further detail below in conjunction with the drawings and embodiments. The following detailed description of the embodiments and the drawings are configured to illustrate the principles of the present application by way of example, but should not be configured to limit the scope of the present application, that is, the present application is not limited to the described embodiments.

In the description of the present application, it should be noted that, unless otherwise stated, "plurality of" means two or more; the orientation or positional relationships indicated by the terms "upper", "lower", "left", "right", "inner" and "outer" are only for facilitating the description of the present application and simplifying the description, rather than indicating or implying that the apparatus or element referred to must have a particular orientation or be constructed and operated in a particular orientation, and therefore will not be interpreted as limiting the present application. In addition, the terms "first", "second" and "third" are used for descriptive purposes only, and cannot be construed as indicating or implying relative importance. "Perpendicular" is not strictly perpendicular, but within the allowable range of errors. "Parallel" is not strictly parallel, but within the allowable range of errors.

Orientation words appearing in the following description are all directions shown in the drawings, and do not limit the specific structure of the present application. In the description of the present application, it should also be noted that, unless otherwise expressly specified and limited, the terms "mount," "connected," and "connecting" should be broadly understood, for example, they may be a fixed connection or a detachable connection or be an integrated connection; or may be a direct connection or an indirect connection through an intermediate medium. For those of ordinary skill in the art, the specific meanings of the above terms in the present application may be understood according to specific circumstances.

In the present application, the term "and/or" is only an association relationship for describing associated objects, indicating that there may be three relationships, for example, A and/or B may represent three situations: A exists alone, both A and B exist, and B exists alone. In addition, the character "/" in the present application generally means that the associated objects before and after it are in an "or" relationship.

Unless otherwise defined, all technical and scientific terms used in the present application have the same meaning as commonly understood by those skilled in the art to which the present application belongs. The terms used in the applied specification of present application are for the purpose of describing specific embodiments only, and are not intended to limit the present application. The terms "include/comprise" and "have" and any variations thereof in the specification and claims of the present application as well as in the above description of drawings are intended to cover a non-exclusive inclusion. The terms "first," "second," etc. in the specification and the claims of the present application as well as the above drawings are used to distinguish different objects, rather than to describe a specific order or primary-secondary relationship.

The phrase "embodiment" referred to in the present application means that the descriptions of specific features, structures, and characteristics in combination with the embodiment are included in at least one embodiment of the present application. The appearance of this phrase in various places in the specification does not necessarily refer to the same embodiment, nor is it a separate or alternative embodiment that is mutually exclusive with other embodiments. It is understood explicitly and implicitly by those skilled in the art that the embodiments described in the present application may be combined with other embodiments.

The present application relates to the field of batteries, and specifically to a battery system including a plurality of battery clusters. The battery clusters refer to a battery combination formed by connecting batteries in series, parallel or series-parallel, in which, series-parallel connection refers to a combination of series connection and parallel connection. For example, the battery clusters in the present application may be formed from connecting a plurality of batteries in series or parallel. For another example, the battery clusters in the present application may be formed by connecting the plurality of batteries in parallel and then connecting in series. The plurality of battery clusters can be connected in series and parallel with each other to form the battery system, which can be applied to an energy storage system or a power system to improve the energy storage capacity of the energy storage system or the driving power of the power system. In some related technologies, the battery clusters may also be referred to as a battery pack, stack, or other name.

In the present application, the battery refers to a physical module that includes one or more battery batteries to provide electrical energy, and when the battery includes a plurality of battery batteries, the plurality of battery batteries may be connected in series and/or in parallel to form the battery, and the specific series and parallel connection methods are as described above and will not be listed here. Optionally, in the present application, the battery may be a lithium-ion battery, a lithium metal battery, a lead-acid battery, a nickel-cadmium battery, a nickel-metal hydride battery, a lithium-sulfur battery, a lithium-air battery, a sodium-ion battery or a magnesium-ion battery, etc., which is not specifically limited in the present application

In the operation process of the battery system including the plurality of battery clusters, for example, in the charging and discharging process of the battery system, the batteries in each battery cluster will produce high heat, the heat between adjacent battery clusters will transfer to each other, and if good thermal management is not provided for the plurality of battery clusters, it will not only affect the operation performance of the battery system, but also easily cause safety problems such as thermal runaway and explosion. In addition, in the operation process of the battery system, if the ambient temperature of the battery system is low, it may also affect the capacity and output power of the batteries in the battery cluster, thereby affecting the operation performance and life of the battery system.

In order to solve the above-mentioned related problems caused by the influence of temperature, in some related technologies, the energy storage system or power system can be equipped with a temperature management system, or, the temperature management system can also be called a Thermal Management System (TMS). The TMS can be configured to perform temperature management on the plurality of battery clusters, thus performs temperature regulation on the batteries in the plurality of battery clusters so as to make the batteries in the plurality of battery clusters within a relatively stable temperature range. Optionally, the TMS can be an air-cooled thermal management system, a liquid-cooled thermal management system, a phase change thermal management system, etc., and the specific type of the TMS is not limited in the present application.

Based on this TMS, some temperature management strategies for the batteries in the plurality of battery clusters are provided in related technologies, for example, temperature regulation is performed on the batteries with the maximum or minimum temperature in the plurality of battery clusters, so that the difference between the maximum temperature value and the minimum temperature value of the batteries in the plurality of battery clusters can be maintained within a preset range. This technical solution is only effective for the temperature uniformity among the batteries, the temperature difference among the battery clusters will increase due to the superposition of the temperature difference among single batteries, which will cause non-uniform impedance and current of each cluster, affect the charge and discharge capacity of the battery clusters, and lead to the loss of part of the power, and then affect the operation performance of the battery clusters.

In view of this, the present application provides a novel temperature control method for a battery system, which includes: acquiring the temperature of each of a plurality of battery clusters of the battery system; determining a target battery cluster among the plurality of battery clusters according to the temperature of each battery cluster; and performing temperature control on the target battery cluster. According to the temperature control method, the temperature of each battery cluster in the battery system is acquired, the temperature can represent the overall temperature condition of each battery cluster, and then the target battery cluster among the plurality of battery clusters is further determined according to the temperature of each battery cluster; the target battery cluster can be an abnormal battery cluster with relatively high or relatively low temperature in the plurality of battery clusters, temperature control is performed on the target battery cluster, which is conducive to reducing the loss of the lives of the batteries caused by excessively high or low temperature, achieving temperature uniformity among the plurality of battery clusters, solving the problem of non-uniform impedance and current of each battery cluster caused by inconsistent temperature among the clusters, reducing the situation in which the battery cluster is fully charged or discharged in advance in the charging process, improving the energy conversion efficiency of the battery system, and improving the operation performance of the battery system where the plurality of battery clusters are located.

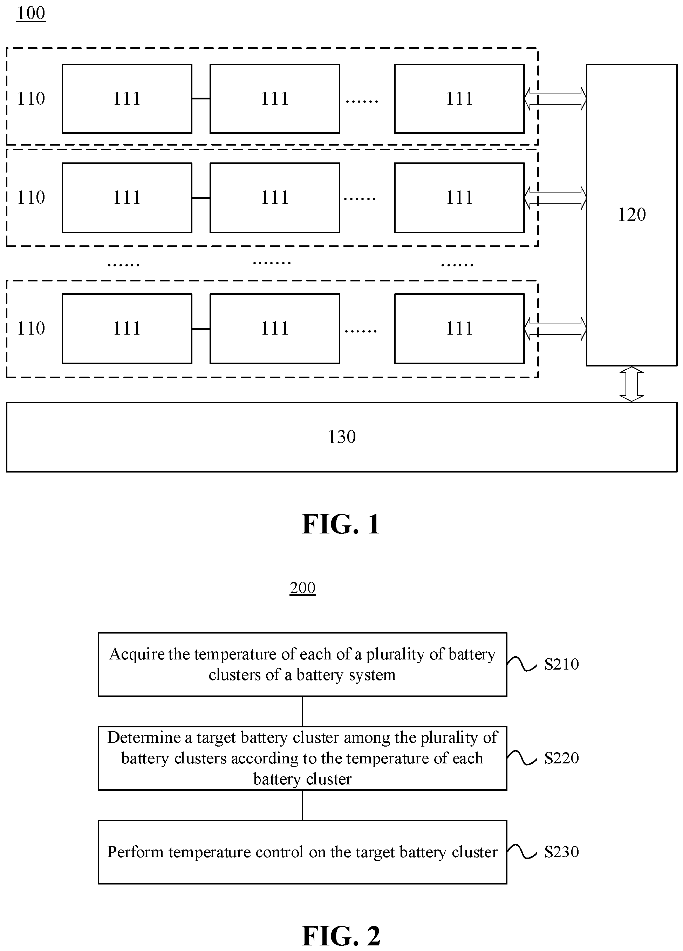

FIG. 1 is a schematic structural block diagram of a system 100 provided by an embodiment of the present application

As shown in FIG. 1, the system 100 can include: a plurality of battery clusters 110, a Battery Management System (BMS) 120 and a Thermal Management System (TMS) 130.

Each of the plurality of battery clusters 110 may include at least one battery 111. Batteries 111 in each battery cluster 110 can be connected in series, parallel or series-parallel to each other. The plurality of battery clusters 110 can be connected in parallel to each other to form the battery system. The number of the batteries in each of the plurality of battery clusters 110 is generally equal, so that electrical parameters of the plurality of battery clusters 110 can be balanced, circulation among the battery clusters 110 can be reduced, and furthermore, the capacity and the operation performance of the battery system are further improved.

The BMS 120 can be configured to intelligently manage and maintain each battery 111 in the plurality of battery clusters 110, and monitor the state of the battery 111 to prevent the battery 111 from being overcharged and overdischarged, and prolong the service life of the battery 111. Specifically, the BMS 120 can monitor the operation state and related operation parameters of each battery in the battery clusters 110, such as current, voltage and temperature, and more electrical parameters representing the state of the battery 111 are computed according to the operation parameters, such as a State of Charge (SOC), and a State of Health (SOH). By means of the BMS 120, charging and discharging of the batteries 111 in the plurality of battery clusters 110 can be well controlled, and different processing measures are taken for different conditions of the batteries 111, so that a good management effect is achieved in the battery system.

The TMS 130 can achieve a thermal management function on the plurality of battery clusters 110, which solves the problem that the batteries 111 in the battery clusters 110 run at too high or too low temperature to cause heat dissipation or thermal runaway. The TMS 130 can include a temperature control unit and a temperature regulation unit. The temperature regulation unit can provide a temperature regulation carrier (such as air or liquid) to flow through each battery 111 in the battery clusters 110, thus regulating the temperature of the battery clusters 110. The temperature control unit can be connected to the temperature regulation unit to control the operation state of the temperature regulation unit.

Under the condition that the TMS 130 is the air-cooled thermal management system, the TMS 130 can include a fan (namely the temperature regulation unit is the fan), and the start and the rotating speed of the fan can be controlled to realize temperature regulation function on the battery clusters 110. Under the condition that the TMS 130 is the liquid-cooled thermal management system, the TMS 130 can include a water-cooled plate, a water-cooled pipeline and other structures (namely the temperature regulation unit is a water-cooled structure), and the temperature of liquid in the water-cooled plate or the water-cooled pipeline can be controlled to realize the temperature regulation function on the battery clusters 110. Certainly, the specific temperature regulation manner of the TMS is not limited in the present application, in other alternative embodiments, the TMS 130 can further include other types of temperature regulation apparatuses, the specific implementation solution can refer to the description in the related technology and will not be listed here.

In the embodiment of the present application, communication connection can be built between the BMS 120 and the TMS 130. The TMS 130 can receive related information and instructions from the BMS 120 so as to adjust related temperature regulation manner, thus realizing effective regulation on the temperature of the battery clusters 110.

The system 100 can be an energy storage system or a power system. For example, the energy storage system may include: an energy storage cabinet, an energy storage container, an energy storage power station and the like. For another example, the power system may include: a power battery system and the like.

It is to be understood that under the condition that the system 100 is the energy storage system or the power system, the system 100 can include other system structures of the energy storage system or the power system, besides the plurality of battery clusters 110, the BMS 120, the TMS 130 and the temperature regulation apparatus 140 shown in FIG. 1. As an example, under the condition that the system 100 is the energy storage system, the system 100 can further include: a Power Conversion System (PCS), an Energy Management System (EMS) and the like.

FIG. 2 is a schematic flow block diagram of one temperature control method 200 for a battery system provided by an embodiment of the present application. Optionally, the temperature control method 200 can be used for performing temperature control on the battery system formed by the plurality of battery clusters 110 shown in FIG. 1.

As shown in FIG. 2, the temperature control method 200 for the battery system can include the following steps.

S210: Acquire the temperature of each of a plurality of battery clusters of the battery system.

S220: Determine a target battery cluster among the plurality of battery clusters according to the temperature of each battery cluster.

S230: Perform temperature control on the target battery cluster.

Optionally, in step S210, the plurality of battery clusters of the battery system can be all battery clusters in the battery system, or, can also be part of battery clusters in the battery system.

Optionally, the temperature of each battery cluster can be used for representing the overall temperature condition of each battery cluster, and in some examples, the temperature of the battery cluster can include the mean temperature of the battery cluster. The mean temperature of the battery cluster can be the mean temperature of all or part of batteries in the battery cluster. For example, the mean temperature of the battery cluster can be the mean value of the temperature of the plurality of batteries at specific positions in the battery cluster, or the mean temperature of the battery cluster can also be the mean value of the temperature of all the batteries in the battery cluster. Besides the mean temperature of the battery cluster, in other examples, the temperature of the battery cluster can further include other temperature values, for example, the maximum temperature value or the minimum temperature value of the batteries in the battery cluster.

In steps S220 and S230, the target battery cluster among the plurality of battery clusters can be determined according to the temperature of each of the plurality of battery clusters, and temperature control is performed on the target battery cluster. As an example, the target battery cluster can be an abnormal battery cluster in the plurality of battery clusters, for example, the temperature of the target battery cluster is higher or lower than the temperature of the other battery clusters in the plurality of battery clusters, and under the condition that the temperature is higher or lower, the target battery cluster may influence the overall temperature uniformity of the plurality of battery clusters, consequently influencing the operation performance of the target battery cluster.

According to the technical solution of the embodiments of the present application, the temperature of each battery cluster in the battery system is acquired, the temperature can represent the overall temperature condition of each battery cluster, and then the target battery cluster among the plurality of battery clusters is further determined according to the temperature of each battery cluster, and temperature control is performed on the target battery cluster, thereby facilitating improvement of temperature uniformity among the plurality of battery clusters where the target battery cluster is located, solving the problem of non-uniform impedance and current of each battery cluster caused by inconsistent temperature among the clusters, reducing the situation in which the battery cluster is fully charged or discharged in advance in the charging process, improving the energy conversion efficiency of the battery system, and improving the operation performance of the battery system where the plurality of battery clusters are located.

In some embodiments, the temperature control method 200 and an implementing subject of the temperature control method in the following embodiments can be the BMS 120 shown in FIG. 1. In the embodiments, the BMS 120 can acquire the temperature of each of the plurality of battery clusters of the battery system, determine the target battery cluster among the plurality of battery clusters according to the temperature of each battery cluster, and then perform temperature control on the target battery cluster.

Optionally, after the high-temperature battery cluster and/or the low-temperature battery cluster are/is determined, the BMS 120 can transmit a temperature control command to the temperature regulation apparatus (for example, the TMS 130 shown in FIG. 1) corresponding to the target battery cluster, and then the temperature regulation apparatus can perform temperature control on the target battery cluster according to the temperature control command. As an example, the temperature control command can include preset control temperature, and the temperature regulation apparatus can perform temperature regulation on the battery clusters according to the preset control temperature.

In some embodiments, the temperature regulation apparatus contains fluid, and the fluid is used for regulating the temperature of each battery cluster. In the embodiments, the temperature regulation apparatus can be a liquid-cooled temperature regulation apparatus, the temperature regulation apparatus can include the water-cooled plate or the water-cooled pipe, and the water-cooled plate or the water-cooled pipe can be attached to or close to the battery clusters so as to perform temperature regulation on the battery clusters.

According to the technical solution of the embodiments, the BMS serving as the main management unit in the battery system can acquire multi-aspect information of the plurality of battery clusters in the battery system, and can be configured to control the temperature regulation system to perform temperature control on the target battery cluster among the plurality of battery clusters, the whole technical solution is easy to realize, the reliability is high, and the overall performance of the battery system can be comprehensively improved.

Further, under the condition that the temperature regulation system is a liquid-cooled temperature regulation system, the liquid-cooled temperature regulation system can perform relatively uniform and effective temperature regulation on the plurality of battery clusters. Compared with a scene that an air-cooled temperature regulation system (such as a fan) is poor in temperature regulation uniformity, the technical solution of the embodiments has the advantage that the temperature regulation effect on the plurality of battery clusters in the battery system can be further improved.

Optionally, in the embodiments of the present application, the target battery cluster may include: high-temperature battery clusters and/or low-temperature battery clusters, in which, the difference between the temperature of the high-temperature battery clusters and the first target temperature of the plurality of battery clusters meets a first preset condition, the difference between the temperature of the low-temperature battery clusters and the second target temperature of the plurality of battery clusters meets a second preset condition, the first target temperature and the second target temperature are any one selected from the group consisting of the following temperature: the maximum value, the minimum value or the mean value of the temperature of the plurality of battery clusters.

Specifically, in the embodiments, the high-temperature battery clusters with high temperature and/or the low-temperature battery clusters with low temperature in the plurality of battery clusters can be determined according to a preset condition, the preset condition can be set according to actual requirements, and it is not specifically limited in the embodiments of the present application. In some examples, the maximum value, the minimum value or the mean value of the temperature of the plurality of battery clusters can be selected as the target temperature, and the high-temperature battery clusters and/or the low-temperature battery clusters in the plurality of battery clusters can be determined according to the target temperature.

According to the technical solution of the embodiments, the temperature control is performed on the high-temperature battery clusters and/or the low-temperature target battery clusters in the plurality of battery clusters, which is conducive to reducing the loss of the service lives of the batteries caused by too high or too low temperature, further optimizing the temperature uniformity among the plurality of battery clusters, and further comprehensively prolonging the service life and improving the operation performance of the battery system where the plurality of battery clusters are located.

In step S220, as a possible embodiment, the first target temperature is the minimum value of the temperature of the plurality of battery clusters, and the second target temperature is the maximum value of the temperature of the plurality of battery clusters. Under the condition that the difference between the temperature of a first battery cluster in the plurality of battery clusters and the minimum value of the temperature of the plurality of battery clusters is larger than or equal to a first preset positive value to meet the first preset condition, the first battery cluster can be determined to be the high-temperature battery cluster; and/or, under the condition that the difference between the maximum value of the temperature of the plurality of battery clusters and the temperature of a second battery cluster in the plurality of battery clusters is larger than or equal to a second preset positive value to meet the second preset condition, the second battery cluster can be determined to be the low-temperature battery cluster.

As an example, in this embodiment, the temperature of the battery clusters can include the mean temperature of the battery clusters, the BMS can determine the high-temperature battery clusters in the plurality of battery clusters according to the minimum value Tmean_0 of the mean temperature of the plurality of battery clusters, for example, under the condition that the difference △T1 between the mean temperature Tmean_1 and Tmean_0 of the first battery cluster in the plurality of battery clusters is larger than or equal to the first preset positive value Th1, the first battery cluster can be determined to be the high-temperature battery cluster. As an example rather than a limit, the first preset positive value Th1 can be larger than or equal to 2°C (°C represents Celsius).

Similarly, the BMS can also determine the low-temperature battery clusters in the plurality of battery clusters according to the maximum value Tmean_∞ of the mean temperature of the plurality of battery clusters, for example, under the condition that the difference △T2 between Tmean_∞ and the mean temperature Tmean_2 of the second battery cluster in the plurality of battery clusters is larger than or equal to the first preset positive value Th2, the second battery cluster can be determined to be the low-temperature battery cluster. As an example rather than a limit, the second preset positive value Th2 can be larger than or equal to 2°C.

In step S220, as another possible embodiment, the first target temperature is the maximum value of the temperature of the plurality of battery clusters, and the second target temperature is the minimum value of the temperature of the plurality of battery clusters. Under the condition that the difference between the maximum value of the mean temperature of the plurality of battery clusters and the mean temperature of the first battery cluster in the plurality of battery clusters is less than or equal to a third preset positive value to meet the first preset condition, the first battery cluster can be determined to be the high-temperature battery cluster; and/or, under the condition that the absolute value of the difference between the mean temperature of the second battery cluster in the plurality of battery clusters and the minimum value of the mean temperature of the plurality of battery clusters is less than or equal to a fourth preset positive value to meet the second preset condition, the second battery cluster can be determined to be the low-temperature battery cluster.

As an example, in this embodiment, the temperature of the battery clusters may include the mean temperature of the battery clusters, the BMS can determine the high-temperature battery clusters in the plurality of battery clusters according to the maximum value Tmean_∞ of the mean temperature of the plurality of battery clusters, for example, under the condition that the difference △T3 between Tmean_∞ and the mean temperature Tmean_1 of the first battery cluster in the plurality of battery clusters is less than or equal to a third preset positive value Th3, the first battery cluster can be determined to be the high-temperature battery cluster. As an example rather than a limit, the third preset positive value Th3 can be less than or equal to 2°C.

Similarly, the BMS can also determine the low-temperature battery clusters in the plurality of battery clusters according to the minimum value Tmean_∞ of the mean temperature of the plurality of battery clusters, for example, under the condition that the difference △T4 between the mean temperature Tmean_2 and Tmean_0 of the second battery cluster in the plurality of battery clusters is less than or equal to a fourth preset positive value Th4, the second battery cluster can be determined to be the low-temperature battery cluster. As an example rather than a limit, the fourth preset positive value Th4 can be less than or equal to 2°C.

In step S220, as another possible embodiment, the first target temperature and the second target temperature are both mean values of the temperature of the plurality of battery clusters, and under the condition that the difference between the mean temperature of the first battery cluster in the plurality of battery clusters and the average value of the mean temperature of the plurality of battery clusters is larger than or equal to a fifth preset nonnegative value to meet the first preset condition, the first battery cluster can be determined to be the high-temperature battery cluster; and/or, under the condition that the difference between the average value of the mean temperature of the plurality of battery clusters and the mean temperature of the second battery cluster in the plurality of battery clusters is larger than or equal to a sixth preset nonnegative value to meet the second preset condition, the second battery cluster can be determined to be the low-temperature battery cluster.

As an example, in this embodiment, the temperature of the battery clusters may include the mean temperature of the battery clusters, the BMS can determine the high-temperature battery clusters and/or low-temperature battery clusters in the plurality of battery clusters according to the average value Tmean_ave of the mean temperature of the plurality of battery clusters, for example, under the condition that the difference △T5 between the mean temperature Tmean_1 of the first battery cluster in the plurality of battery clusters and Tmean_ave is larger than or equal to a fifth preset nonnegative value Th5, the first battery cluster can be determined to be the high-temperature battery cluster. As an example rather than a limit, the fifth preset nonnegative value Th5 can be equal to 0°C. Under the condition that the difference △T6 between Tmean_0 and the mean temperature Tmean_2 of the second battery cluster in the plurality of battery clusters is larger than or equal to a sixth preset nonnegative value Th6, the second battery cluster can be determined to be the low-temperature battery cluster. As an example rather than a limit, the sixth preset nonnegative value Th6 can be equal to 0°C.

According to the technical solution of the above three embodiments, the high-temperature battery clusters and/or the low-temperature battery clusters in the plurality of battery clusters can be determined according to the difference between the maximum value, the minimum value or the mean value of the temperature of the plurality of battery clusters and the temperature of the plurality of battery clusters respectively; the technical solution is easy to implement, and the reliability is high; and the high-temperature battery clusters with high temperature and the low-temperature battery clusters with low temperature in the plurality of battery clusters can be determined relatively accurately, so that the temperature control effectiveness on the high-temperature battery clusters and/or the low-temperature battery clusters is improved.

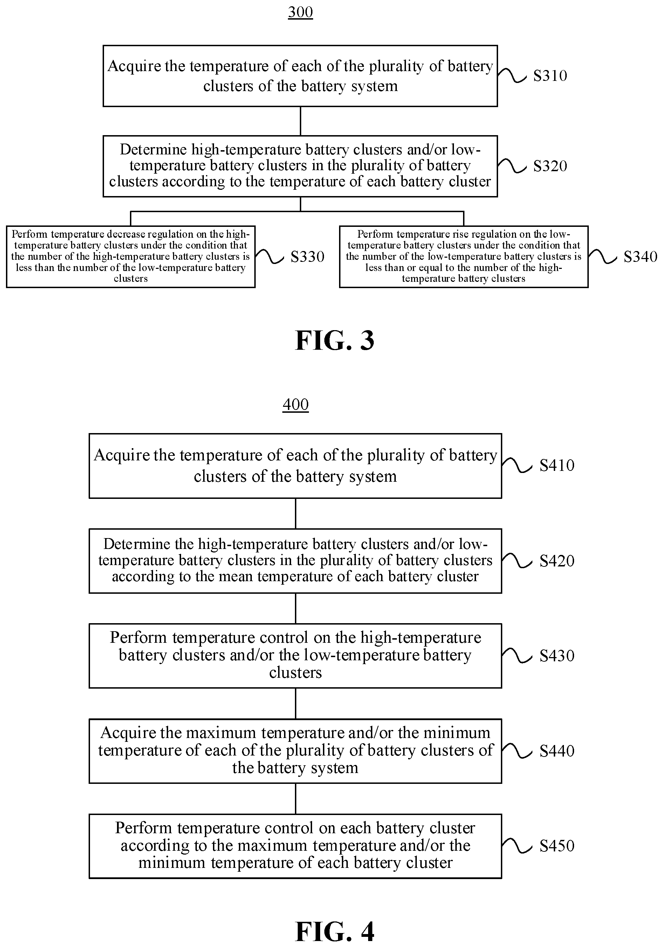

FIG. 3 is a schematic flow block diagram of another temperature control method 300 provided by an embodiment of the present application

As shown in FIG. 3, the temperature control method 300 can include the following steps.

S310: Acquire the temperature of each of a plurality of battery clusters of the battery system.

S320: Determine high-temperature battery clusters and/or low-temperature battery clusters in the plurality of battery clusters according to the temperature of each battery cluster.

S330: Perform temperature decrease regulation on the high-temperature battery clusters under the condition that the number of the high-temperature battery clusters is less than the number of the low-temperature battery clusters.

S340: Perform temperature rise regulation on the low-temperature battery clusters under the condition that the number of the low-temperature battery clusters is less than or equal to the number of the high-temperature battery clusters.

According to the technical solution provided by the embodiments of the present application, under the condition that the number of the high-temperature battery clusters is less than the number of the low-temperature battery clusters, the number of the high-temperature battery clusters in the plurality of battery clusters is relatively small, the phenomenon of "high-temperature outliers" occurs in the plurality of battery clusters, and it is needed to perform temperature decrease regulation on the high-temperature battery clusters in the plurality of battery clusters. Correspondingly, under the condition that the number of the low-temperature battery clusters is less than the number of the high-temperature battery clusters, the number of the low-temperature battery clusters in the plurality of battery clusters is relatively small, the phenomenon of "low-temperature outliers" occurs in the plurality of battery clusters, and it is needed to perform temperature rise regulation on the low-temperature battery clusters in the plurality of battery clusters.

According to the technical solution of the embodiments, when there are few high-temperature battery clusters in the plurality of battery clusters, namely, the phenomenon of "high-temperature outliers" occurs, the high-temperature battery clusters will be subjected to temperature regulation, and correspondingly, when there are few low-temperature battery clusters in the plurality of battery clusters, namely, the phenomenon of "low-temperature outliers" occurs, the low-temperature battery clusters will be subjected to temperature regulation. By means of the technical solution, the temperature regulation efficiency of the battery system where the plurality of battery clusters are located can be improved, the temperature difference among the plurality of battery clusters can be quickly regulated, thereby improving the overall performance of the battery system.

Optionally, in some embodiments of the present application, temperature regulation cannot be performed on other battery clusters in the plurality of battery clusters while temperature decrease regulation is performed on the high-temperature battery clusters in the plurality of battery clusters, or, temperature rise regulation can also be performed on other battery clusters in the plurality of battery clusters. Correspondingly, temperature regulation cannot be performed on other battery clusters in the plurality of battery clusters while temperature rise regulation is performed on low-temperature battery clusters in the plurality of battery clusters, or, temperature decrease regulation can also be performed on other battery clusters in the plurality of battery clusters.

Optionally, under the condition that the number of the low-temperature battery clusters is less than or equal to the number of the high-temperature battery clusters, temperature regulation can also be not performed on the low-temperature battery clusters in addition to temperature rise regulation performed on the low-temperature battery clusters. In the operation process of the low-temperature battery clusters, the low-temperature battery clusters will produce heat, so that the temperature of the low-temperature battery clusters can also be raised by the generated heat. In the embodiments, the overall power consumption of the battery system can be saved.

Optionally, in some embodiments, step S230 in the embodiment shown in FIG. 2 may include a step S330 and a step S340 in the embodiment shown in FIG. 3. Under the condition that the target battery clusters include the high-temperature battery clusters and/or the low-temperature battery clusters, step S230 can include: controlling the regulation temperature of the temperature regulation apparatuses corresponding to the high-temperature battery clusters and/or the low-temperature battery clusters, the temperature regulation apparatuses being configured to perform temperature control on the high-temperature battery clusters and/or the low-temperature battery clusters.

Specifically, in the embodiments, temperature control can be performed on the plurality of battery clusters in the battery system by a plurality of temperature regulation apparatuses (such as the TMS shown in FIG. 1), and the plurality of temperature regulation apparatuses correspond to the plurality of battery clusters one to one. The BMS can control the regulation temperature of the temperature regulation apparatuses corresponding to the high-temperature battery clusters and/or the low-temperature battery clusters in the plurality of temperature regulation apparatuses, so as to regulate the temperature of the high-temperature battery clusters and/or the low-temperature battery clusters.

In some specific embodiments, the BMS can transmit temperature control commands for the high-temperature battery clusters and/or the low-temperature battery clusters to the temperature regulation apparatuses corresponding to the high-temperature battery clusters and/or the low-temperature battery clusters, the temperature control commands may include preset control temperature, and the temperature regulation apparatuses can perform temperature regulation on the high-temperature battery clusters and/or the low-temperature battery clusters according to the preset control temperature.

As an example, the temperature regulation apparatuses can include a water-cooled apparatus, and the BMS can control the water temperature of the water-cooled apparatuses corresponding to the high-temperature battery clusters and/or the low-temperature battery clusters, so as to regulate the temperature of the high-temperature battery clusters and/or the low-temperature battery clusters.

According to the technical solution of the embodiments, corresponding temperature regulation apparatuses are provided for the high-temperature battery clusters and/or the low-temperature battery clusters, which is conducive to performing accurate and effective temperature control on the high-temperature battery clusters and/or the low-temperature battery clusters.

In the temperature regulation process, as a possible embodiment, the regulation temperature of the temperature regulation apparatus corresponding to the high-temperature battery clusters can be controlled to be the minimum value of the temperature of the plurality of battery clusters, and the temperature regulation apparatus corresponding to the high-temperature battery clusters is configured to perform temperature decrease regulation on the high-temperature battery clusters. Optionally, the temperature regulation apparatus corresponding to the high-temperature battery clusters is configured to perform temperature decrease regulation on the high-temperature battery clusters, so as to make the difference between the temperature of the high-temperature battery clusters and the minimum value of the temperature of the battery clusters within a first preset range.

Specifically, as an example, under the condition that the temperature of the battery clusters includes the mean temperature of the battery clusters, the minimum value Tmean_0 of the mean temperature of the plurality of battery clusters represents lower temperature in the battery clusters, the BMS can control the regulation temperature of the temperature regulation apparatus corresponding to the high-temperature battery clusters to be the minimum value Tmean_0, and therefore the temperature regulation apparatus can perform temperature decrease regulation on the high-temperature battery clusters according to the lower temperature. Further, the BMS can compute the difference △T' between the mean temperature of the regulated high-temperature battery clusters and the minimum value Tmean_0 of the mean temperature of the plurality of battery clusters, and determine whether △T' is within the first preset range or not. When △T' is beyond the first preset range, the above temperature regulation process for the high-temperature battery clusters can be repeated until △T' is within the first preset range.

In the temperature regulation process, as another possible embodiment, the regulation temperature of the temperature regulation apparatus corresponding to the low-temperature battery clusters can be controlled to be the maximum value of the temperature of the plurality of battery clusters, and the temperature regulation apparatus corresponding to the low-temperature battery clusters is configured to perform temperature rise regulation on the low-temperature battery clusters. Optionally, the temperature regulation apparatus corresponding to the low-temperature battery clusters is configured to perform temperature decrease regulation on the low-temperature battery clusters, so as to make the difference between the minimum value of the temperature of the plurality of battery clusters and the temperature of the low-temperature battery clusters within a second preset range.

Specifically, as an example, under the condition that the temperature of the battery clusters includes the mean temperature of the battery clusters, the maximum value Tmean_∞ of the mean temperature of the plurality of battery clusters represents higher temperature in the plurality of battery clusters, and the BMS can control the regulation temperature of the temperature regulation apparatus corresponding to the low-temperature battery clusters to be the maximum value Tmean_∞, and thus the temperature regulation apparatus can perform temperature rise regulation on the low-temperature battery clusters according to the higher temperature. Further, the BMS can compute the difference △T" between the mean temperature of the regulated low-temperature battery clusters and the maximum value Tmean_∞ of the mean temperature of the plurality of battery clusters, and determine whether the △T" is within the second preset range or not. When the △T" is beyond the second preset range, the temperature regulation process for the low-temperature battery cluster can be repeated until the △T" is within the second preset range.

According to the technical solution of the above two embodiments, the regulation temperature of the temperature regulation apparatus corresponding to the high-temperature battery clusters can be controlled to be the minimum value Tmean_0 of the mean temperature of the plurality of battery clusters, and/or, the regulation temperature of the temperature regulation apparatus corresponding to the high-temperature battery clusters is controlled to be the maximum value Tmean_∞ of the mean temperature of the plurality of battery clusters, so that effective temperature regulation on the high-temperature battery clusters and/or the low-temperature battery clusters is realized, and the overall temperature regulation efficiency of the battery system is improved.

Optionally, the first preset range and/or the second preset range can be between 0°C and 1°C. By designing the first preset range and/or the second preset range, the temperature regulation effect on the high-temperature battery clusters and/or the low-temperature battery clusters can be effectively improved, and therefore the overall performance of the battery system is improved.

In other alternative embodiments, the first preset range and/or the second preset range can also be adjusted according to actual requirements to meet higher temperature regulation precision or achieve higher temperature regulation efficiency. The preset ranges provided by the embodiments of the present application coves both the temperature regulation precision and the regulation efficiency, thereby improving the temperature regulation performance of the battery system.

On the basis of the above embodiments, the temperature control method for a battery system includes: performing temperature control on the target battery cluster among the plurality of battery clusters, and further includes: performing temperature control on each battery cluster according to the temperature of each of the plurality of battery clusters.

According to the technical solution of the embodiments, temperature control and regulation can be further performed on the plurality of battery clusters in the battery system, thus improving the temperature uniformity among the plurality of battery clusters, and further improving the operation performance of the battery system where the plurality of battery clusters are located.

Optionally, in some embodiments, after the temperature control is performed on the target battery cluster of the battery system, the temperature control is further performed on each battery cluster, so that the temperature uniformity among the plurality of battery clusters in the battery system can be further improved. After the temperature control is performed on the target battery cluster, the operation efficiency of performing temperature control on each battery cluster in the battery system subsequently can also be improved.

FIG. 4 is a schematic flow block diagram of another temperature control method 400 provided by an embodiment of the present application

As shown in FIG. 4, the temperature control method 400 can include the following steps.

S410: Acquire the mean temperature of each of a plurality of battery clusters of the battery system.

S420: Determine high-temperature battery clusters and/or low-temperature battery clusters in the plurality of battery clusters according to the mean temperature of each battery cluster.

S430: Perform temperature control on the high-temperature battery clusters and/or the low-temperature battery clusters.

S440: Acquire the maximum temperature and/or the minimum temperature of each of the plurality of battery clusters of the battery system.

S450: Perform temperature control on each battery cluster according to the maximum temperature and/or the minimum temperature of each battery cluster.

Specifically, in this embodiment, the temperature of the battery clusters may include the mean temperature, the maximum temperature and/or the minimum temperature of the battery clusters. Under the condition that the temperature of the battery clusters includes the mean temperature of the battery clusters, steps S410 to S430 can refer to the related description of the above embodiments.

In steps S440 and S450, the temperature of the battery clusters may include the maximum temperature and/or the minimum temperature of the battery clusters. The BMS can acquire the maximum temperature and/or the minimum temperature of each of the plurality of battery clusters, and perform temperature control on each battery cluster according to the maximum temperature and/or the minimum temperature. The maximum temperature of each battery cluster is the maximum temperature value of the batteries in each battery cluster, and the maximum temperature of each battery cluster is the minimum temperature value of the batteries in each battery cluster.

According to the technical solution of the embodiments, temperature control cannot only be performed on the high-temperature battery clusters and/or the low-temperature battery clusters in the plurality of battery clusters, but also can be performed on each battery cluster according to the maximum temperature and/or the minimum temperature of each battery cluster, thereby further finely regulating the temperature of each battery cluster, and keeping high temperature uniformity among the batteries in each battery cluster.

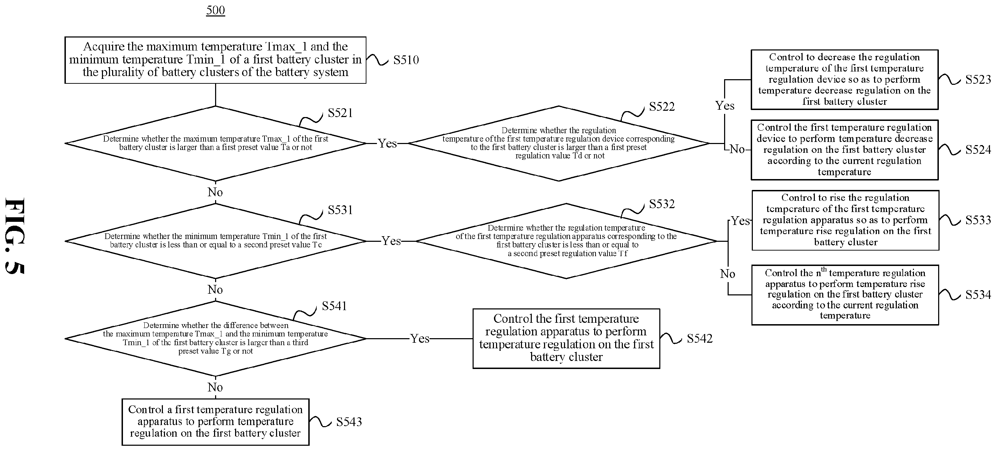

On the basis of the embodiment shown in FIG. 4, FIG. 5 is a schematic flow block diagram of another temperature control method 500 provided by an embodiment of the present application. The temperature control method 500 is mainly used for performing temperature control on each battery cluster according to the maximum temperature and the minimum temperature of each of the plurality of battery clusters.

As shown in FIG. 5, the temperature control method 500 can include the following steps.

S510: Acquire the maximum temperature Tmax_1 and the minimum temperature Tmin_1 of a first battery cluster in a plurality of battery clusters of the battery system.

S521: Determine whether the maximum temperature Tmax_1 of the first battery cluster is larger than a first preset value Ta or not.

S522: If the maximum temperature Tmax_1 of the first battery cluster is larger than the first preset value Ta, determine whether the regulation temperature of a first temperature regulation apparatus corresponding to the first battery cluster is larger than a first preset regulation value Td or not.

S523: If the regulation temperature of the first temperature regulation apparatus is larger than the first preset regulation value Td, control to decrease the regulation temperature of the first temperature regulation apparatus so as to perform temperature decrease regulation on the first battery cluster.

S524: If the regulation temperature of the first temperature regulation apparatus is less than or equal to the first preset regulation value Td, control the first temperature regulation apparatus to perform temperature decrease regulation on the first battery cluster according to the current regulation temperature.

Specifically, in step S510, the BMS can acquire the maximum temperature and the minimum temperature of each battery cluster in the battery system in sequence, for example, the BMS can acquire the maximum temperature Tmax_1 and the minimum temperature Tmin_1 of the first battery cluster in the battery system.

In step S521, the BMS can sequentially determine whether the maximum temperature of each battery cluster in the battery system is larger than the first preset value Ta or not. For example, the BMS can determine whether the maximum temperature Tmax_1 of the first battery cluster in the battery system is larger than the first preset value Ta or not. Under the condition that the maximum temperature Tmax_1 of the first battery cluster is larger than the first preset value Ta, the first battery cluster includes batteries with high temperature, and therefore it is needed to perform temperature decrease regulation on the first battery cluster. Under the condition that the maximum temperature Tmax_1 of the first battery cluster is less than or equal to the first preset value Ta, the BMS can control to stop temperature regulation on the first battery cluster, for example, the BMS controls the first temperature regulation apparatus corresponding to the first battery cluster to start sleep.

Optionally, the BMS not only determines whether the maximum temperature Tmax_1 of the first battery cluster in the battery system is larger than the first preset value Ta or not, but also determines whether the minimum temperature Tmin_1 of the first battery cluster is larger than another preset value Tb or not. The another preset value Tb is larger than the first preset value Ta. Under the condition that the maximum temperature Tmax_1 of the first battery cluster is larger than the first preset value Ta and the minimum temperature Tmin_1 of the first battery cluster is larger than the another preset value Tb, the BMS can perform temperature decrease regulation on the first battery cluster. In this way, the BMS can combine the maximum temperature Tmax_1 and the minimum temperature Tmin_1 of the first battery cluster to know the overall temperature distribution of the first battery cluster, so as to perform accurate regulation control on the first battery cluster.

In some embodiments, under the condition that the maximum temperature Tmax_1 of the first battery cluster is larger than the first preset value Ta, or the maximum temperature Tmax_1 of the first battery cluster is larger than the first preset value Ta and whether the minimum temperature Tmin_1 of the first battery cluster is larger than the another preset value Tb, the BMS can further acquire the regulation temperature of the first temperature regulation apparatus corresponding to the first battery cluster, and perform temperature decrease regulation on the first battery cluster according to the regulation temperature of the first temperature regulation apparatus.

For example, with reference to step S522 to step S524, the BMS can determine whether the regulation temperature of the first temperature regulation apparatus corresponding to the first battery cluster is larger than the first preset regulation value Td or not. Under the condition that the regulation temperature of the first temperature regulation apparatus is larger than the first preset regulation value Td, the first temperature regulation apparatus cannot perform good and effective temperature regulation on the first battery cluster according to the current regulation temperature. In view of this, under the condition that the regulation temperature of the first temperature regulation apparatus is larger than the first preset regulation value Td, the BMS can control to decrease the regulation temperature of the first temperature regulation apparatus so as to perform temperature decrease regulation on the first battery cluster; or, under the condition that the regulation temperature of the first temperature regulation apparatus is less than or equal to the first preset regulation value Td, the BMS can control the first temperature regulation apparatus to perform temperature decrease regulation on the first battery cluster according to current regulation temperature.

As an example, under the condition that the first temperature regulation apparatus is a water-cooled apparatus corresponding to the first battery cluster, in step S523, the BMS can control the temperature of water in the water-cooled apparatus to be reduced so as to perform temperature decrease regulation on the first battery cluster. In step S524, the BMS can start self-circulation of the water-cooled apparatus, and the water-cooled apparatus will perform temperature decrease regulation on the first battery cluster according to the current water cooling temperature.

Optionally, in the above embodiments, the first preset value Ta and the first preset regulation value Td can both be preset values set according to actual needs. The first preset value Ta can be determined according to an optimal temperature threshold of the batteries, as an example rather than a limit, the first preset value Ta can be larger than 20°C, for example, the first preset value Ta can be 20°C-30°C. The first preset regulation value Td can be less than the first preset value Ta, as an example rather than a limit, the first preset regulation value Td can be between value obtained by subtracting 9°C from Ta and value obtained by subtracting 11°C from Ta.

Optionally, under the condition that the BMS controls to decrease the regulation temperature of the first temperature regulation apparatus so as to perform temperature decrease regulation on the first battery cluster, the BMS can transmit a temperature decrease command to the first temperature regulation apparatus, the temperature decrease command may include preset low temperature, and the preset temperature Tset is less than the current regulation temperature Tcurrent of the first temperature regulation apparatus. As an example rather than a limit, the preset temperature Tset can be between temperature obtained by subtracting 3°C from Tcurrent and temperature obtained by subtracting 5°C from Tcurrent.

Under the condition that the BMS controls the first temperature regulation apparatus to perform temperature decrease regulation on the first battery cluster according to the current regulation temperature, the BMS can transmit the self-circulation command to the first temperature regulation apparatus, the self-circulation command may include the current regulation temperature Tcurrent of the first temperature regulation apparatus, and the first temperature regulation apparatus will start self-circulation according to the received self-circulation command.

According to the technical solution of the embodiments of the present application, on the basis of acquiring the maximum temperature of the first battery cluster, the regulation temperature of the first temperature regulation apparatus corresponding to the first battery cluster is further acquired, and the current temperature state of the first temperature regulation apparatus is fully used in temperature decrease regulation on the first battery cluster, thereby reducing the possibility of real-time operation of the first temperature regulation apparatus, and reducing the operation power consumption of the first temperature regulation apparatus.

Further, in some embodiments of the technical solution, different temperature decrease regulation modes of the first temperature regulation apparatus can be controlled according to the regulation temperature of the first temperature regulation apparatus and the first preset regulation value, the technical solution in the embodiments is easy to implement, the reliability is high, and effective temperature decrease regulation on the first battery cluster is facilitated.

With reference to FIG. 5, the temperature control method 500 can further include the following steps.

S531: Determine whether the minimum temperature Tmin_1 of the first battery cluster is less than or equal to a second preset value Tc.

S532: If the minimum temperature Tmin_1 of the first battery cluster is less than or equal to the second preset value Tc, determine whether the regulation temperature of the first temperature regulation apparatus corresponding to the first battery cluster is less than or equal to a second preset regulation value Tf.

S533: If the regulation temperature of the first temperature regulation apparatus is less than or equal to the second preset regulation value Tf, control to rise the regulation temperature of the first temperature regulation apparatus so as to perform temperature rise regulation on the first battery cluster.

S534: If the regulation temperature of the first temperature regulation apparatus is larger than the second preset regulation value Tf, control the nth temperature regulation apparatus to perform temperature rise regulation on the first battery cluster according to the current temperature.

Optionally, in some embodiments, as shown in FIG. 5, step S531 can be implemented after step S521, that is, step S531 can be implemented under the condition that the maximum temperature Tmax_1 of the first battery cluster is less than or equal to the first preset value Ta. Or, in some other embodiments, step S531 can also be implemented before step S521, that is, the BMS firstly determines whether the minimum temperature Tmin_1 of the first battery cluster in the plurality of battery clusters is less than or equal to the second preset value Tc, and step S521 is implemented under the condition that the minimum temperature Tmin_1 of the first battery cluster is larger than the second preset value Tc.

In step S531, the BMS can sequentially determine whether the minimum temperature of each battery cluster in the battery system is less than or equal to the second preset value Tc or not. For example, the BMS can determine whether the minimum temperature Tmin_1 of the first battery cluster in the battery system is less than or equal to the second preset value Tc or not. Under the condition that the minimum temperature Tmin_1 of the first battery cluster is less than or equal to the second preset value Tc, the first battery cluster includes batteries with low temperature, and therefore it is needed to perform temperature rise regulation on the first battery cluster. Under the condition that the minimum temperature Tmin_1 of the first battery cluster is larger than the second preset value Tc, the BMS can control to stop temperature regulation on the first battery cluster, for example, the BMS controls the first temperature regulation apparatus corresponding to the first battery cluster to start sleep.

In some embodiments, under the condition that the minimum temperature Tmin_1 of the first battery cluster is less than or equal to the second preset value Tc, the BMS can further acquire the regulation temperature of the first temperature regulation apparatus corresponding to the first battery cluster, and perform temperature rise regulation on the first battery cluster according to the regulation temperature of the first temperature regulation apparatus.

For example, with reference to steps S532 to S534, the BMS can determine whether the regulation temperature of the first temperature regulation apparatus corresponding to the first battery cluster is less than or equal to the second preset regulation value Tf or not. Under the condition that the regulation temperature of the first temperature regulation apparatus is less than or equal to the second preset regulation value Tf, the current regulation temperature of the first temperature regulation apparatus is low, and good and effective temperature rise effect on the first battery cluster cannot be achieved according to the current regulation temperature. In view of this, under the condition that the regulation temperature of the first temperature regulation apparatus is less than or equal to the second preset regulation value Tf, the BMS can control to rise the regulation temperature of the first temperature regulation apparatus so as to perform temperature rise regulation on the first battery cluster; or, under the condition that the regulation temperature of the first temperature regulation apparatus is larger than the second preset regulation value Tf, the BMS can control the first temperature regulation apparatus to perform temperature rise regulation on the first battery cluster according to the current regulation temperature.

As an example, under the condition that the first temperature regulation apparatus is the water-cooled apparatus corresponding to the first battery cluster, in step S533, the BMS can control to rise the temperature of water in the water-cooled apparatus so as to perform temperature rise regulation on the first battery cluster. In step S534, the BMS can start the self-circulation of the water-cooled apparatus, and then the water-cooled apparatus will perform temperature rise regulation on the first battery cluster according to the current water cooling temperature.

Optionally, in the above embodiments of the present application, the second preset value Tc and the second preset regulation value Tf can both be preset values set according to actual needs. The second preset value Tc can be determined according to an optimal temperature threshold of the batteries, and the second preset value Tc can be less than the first preset value Ta. As an example rather than a limit, the second preset value Tc can be between the value obtained by subtracting 3°C from Ta and the value obtained by subtracting 5°C from Ta. The second preset regulation value Tf can be larger than the second preset value Tc, as an example rather than a limit, the second preset regulation value Tf can be between the value obtained by adding 14°C to Tc and the value obtained by adding 16°C to Tc.

Optionally, under the condition that the BMS controls to rise the regulation temperature of the first temperature regulation apparatus so as to perform temperature rise regulation on the first battery cluster, the BMS can transmit a temperature rise command to the first temperature regulation apparatus, the temperature rise command may include preset high temperature, and the preset temperature Tset is larger than the current regulation temperature Tsent of the first temperature regulation apparatus. As an example rather than a limit, the preset temperature Tset can be between temperature obtained by adding 3°C to Tcurrent and temperature obtained by adding 5°C to Tcurrent.

Under the condition that the BMS controls the first temperature regulation apparatus to perform temperature rise regulation on the first battery cluster according to the current regulation temperature, the BMS can transmit a self-circulation command to the first temperature regulation apparatus, the self-circulation command may include the current regulation temperature Tcurrent of the first temperature regulation apparatus, and the first temperature regulation apparatus will start self-circulation according to the received self-circulation command.

According to the technical solution of the embodiments of the present application, on the basis of acquiring the minimum temperature of the first battery cluster, the regulation temperature of the first temperature regulation apparatus corresponding to the first battery cluster is further acquired, the current regulation temperature state of the first temperature regulation apparatus is fully used in temperature rise regulation on the first battery cluster, thereby reducing the possibility of real-time operation of the first temperature regulation apparatus, and reducing the operation power consumption of the first temperature regulation apparatus.

Further, in some embodiments of the technical solution, different temperature rise regulation manners of the first temperature regulation apparatus can be controlled according to the regulation temperature of the first temperature regulation apparatus and the second preset regulation value, the technical solution in the embodiments is easy to implement, the reliability is high, and effective temperature rise regulation on the first battery cluster is facilitated.

With reference to FIG. 5, the temperature control method 500 can further include the following steps.

S541: Determine whether the difference between the maximum temperature Tmax_1 and the minimum temperature Tmin_1 of the first battery cluster is larger than a third preset value Tg or not.

S542: If the difference between the maximum temperature Tmax_1 and the minimum temperature Tmin_1 of the first battery cluster is larger than the third preset value Tg, control the first temperature regulation apparatus to perform temperature regulation on the first battery cluster.

S543: If the difference between the maximum temperature Tmax_1 and the minimum temperature Tmin_1 of the first battery cluster is less than or equal to the third preset value Tg, control the first temperature regulation apparatus to start sleep.

Optionally, in some embodiments, as is shown in FIG. 5, step S541 can be implemented after step S531, that is, under the condition that the minimum temperature Tmin_1 of the first battery cluster is larger than the second preset value Tc, step S541 can be implemented. Or, in some other embodiments, step S541 can be implemented before step S531 and/or step S521, and the implementation sequence of step S521, step S531 and step S541 is not specifically limited in the embodiments of the present application.

In step S541, the BMS can sequentially determine whether the difference between the maximum temperature and the minimum temperature of each battery cluster in the battery system is larger than the third preset value Tg or not. For example, the BMS can determine whether the difference between the maximum temperature Tmax_1 and the minimum temperature Tmin_1 of the first battery cluster in the battery system is larger than the third preset value Tg or not. Under the condition that the difference between the maximum temperature Tmax_1 and the minimum temperature Tmin_1 of the first battery cluster is larger than the third preset value Tg, the temperature difference between the battery with the maximum temperature and the battery with the minimum temperature in the first battery cluster is large, and therefore it is needed to perform temperature regulation on the first battery cluster.

With reference to step S542 to step S543, under the condition that the difference between the maximum temperature Tmax_1 and the minimum temperature Tmin_1 of the first battery cluster is larger than the third preset value Tg, the BMS can control the first temperature regulation apparatus corresponding to the first battery cluster to perform temperature regulation on the first battery cluster, or, under the condition that the difference between the maximum temperature Tmax_1 and the minimum temperature Tmin_1 of the first battery cluster is less than or equal to the third preset value Tg, the BMS can control to stop temperature regulation on the first battery cluster, for example, the BMS controls the first temperature regulation apparatus corresponding to the first battery cluster to start sleep.

Optionally, in the embodiments of the present application, the third preset value Tg can be a preset value set according to actual needs. As an example rather than a limit, the third preset value Tg can be 3°C-5°C.

Optionally, the BMS can control the regulation temperature of the first temperature regulation apparatus so as to perform temperature regulation on the first battery cluster, in this condition, the BMS can transmit a temperature regulation command to the first temperature regulation apparatus, and the temperature regulation command may include preset temperature Tset. As an example, the preset temperature Tset can be the current regulation temperature Tcurrent of the first temperature regulation apparatus, and the first temperature regulation apparatus starts self-circulation, and performs temperature regulation on the first battery cluster according to the current regulation temperature Tcurrent. In other examples, the preset temperature Tset can also be other temperature values, it is not specifically limited in the embodiments of the present application.

According to the technical solution of the embodiments of the present application, the maximum temperature and the minimum temperature of the first battery cluster can be acquired, and the temperature regulation mode for the first battery cluster is determined according to the difference between the maximum temperature and the minimum temperature, thereby further improving the temperature uniformity in the first battery cluster, and improving the overall performance of the battery system.

Optionally, in some embodiments, under the condition that the temperature of the battery clusters includes the mean temperature of the battery clusters, the temperature control method further includes: performing temperature control on each battery cluster according to the mean temperature of each battery cluster

According to the technical solution of the embodiments, the mean temperature of each battery cluster can represent the overall temperature condition of each battery cluster, and further, the temperature control is performed on each battery cluster according to the mean temperature of each battery cluster, thus the temperature uniformity among the plurality of battery clusters in the battery system is realized, and further, the operation performance of the battery system where the plurality of battery clusters are located is improved.

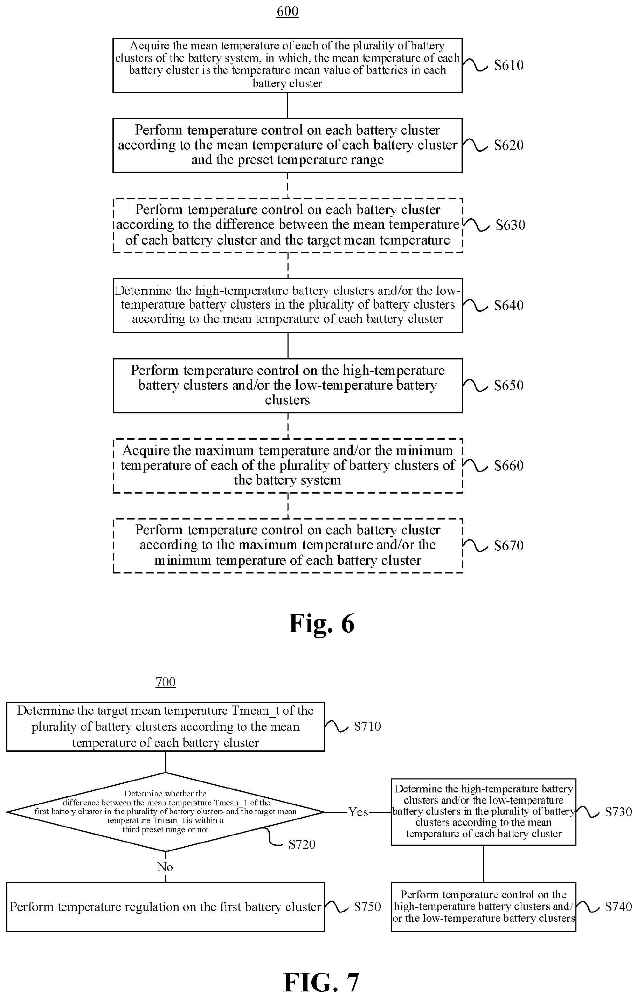

In the embodiment, FIG. 6 is a schematic flow block diagram of another temperature control method 600 provided by an embodiment of the present application

As shown in FIG. 6, the temperature control method 600 can include the following steps.

S610: Acquire the mean temperature of each of a plurality of battery clusters of the battery system, in which, the mean temperature of each battery cluster is the temperature mean value of batteries in each battery cluster.

S620: Perform temperature control on each battery cluster according to the mean temperature of each battery cluster and the preset temperature range.

S640: Determine high-temperature battery clusters and/or low-temperature battery clusters in the plurality of battery clusters according to the mean temperature of each battery cluster.

S650: Perform temperature control on the high-temperature battery clusters and/or the low-temperature battery clusters.

Specifically, in this embodiment of the present application, after acquiring the mean temperature of each battery cluster of the battery system, the BMS can perform temperature control on each battery cluster according to the mean temperature of each battery cluster and the preset temperature range, so that the mean temperature of each of the plurality of battery clusters can be controlled within the preset temperature range, and the temperature uniformity among the plurality of battery clusters is further improved.

Optionally, in some embodiments, step S620 can be implemented before step S640, namely, the BMS performs temperature control on each battery cluster according to the mean temperature of each battery cluster and the preset temperature range, then determines the high-temperature battery clusters and/or the low-temperature battery clusters in the plurality of battery clusters according to the mean temperature of each battery cluster, and performs temperature control on the high-temperature battery clusters and/or the low-temperature battery clusters. In the embodiments, the BMS controls the mean temperature of each battery cluster within the preset temperature range firstly, so that the mean temperature of each battery cluster is not too high or too low, which is conducive to improving the temperature regulation efficiency in subsequent temperature control on the high-temperature battery clusters and/or the low-temperature battery clusters.

In some alternative embodiments, step S620 can also be implemented after step S640 and step S650, namely, the BMS performs temperature control on the high-temperature battery clusters and/or the low-temperature battery clusters, and then performs temperature control on each battery cluster according to the mean temperature of each battery cluster and the preset temperature range.

Optionally, with reference to FIG. 6, in this embodiment of the present application, the temperature control method 600 can include the following steps.

S660: Acquire the maximum temperature and/or the minimum temperature of each of the plurality of battery clusters of the battery system.

S670: Perform temperature control on each battery cluster according to the maximum temperature and/or the minimum temperature of each battery cluster.

Specifically, the specific technical solutions of step S660 and step S670 can be referred to the related description of the above embodiments shown in the FIG. 4 and FIG. 5, and will not be listed here.

**In** addition, as an example, as shown in FIG. 6, step S660 and step S670 can be implemented after step S650, namely, the BMS performs temperature control on the high-temperature battery clusters and/or the low-temperature battery clusters in the plurality of battery clusters to realize temperature uniformity among the clusters, and then performs temperature control on each battery cluster according to the maximum temperature and/or the minimum temperature of each battery cluster so as to realize temperature uniformity in the clusters.

Or, in some alternative embodiments, step S660 and step S670 can also be implemented before step S650 and/or step S620. The specific implementation sequence of step S620, step S650 and step S670 are not limited in the embodiments of the present application.

Optionally, in the process of performing temperature control on each battery cluster according to the mean temperature of each battery cluster and the preset temperature range, the BMS can sequentially determine whether the mean temperature of each battery cluster is within the preset temperature range or not, and under the condition that the mean temperature of the first battery cluster in the plurality of battery clusters is larger than the maximum value in the preset temperature range, temperature decrease regulation will be performed on the first battery cluster so as to make the mean temperature of the first battery cluster within the preset temperature range; or, under the condition that the mean temperature of the first battery cluster is less than the minimum value in the preset temperature range, temperature decrease regulation will be performed on the first battery cluster so as to make the mean temperature of the first battery cluster within the preset temperature range.

In some embodiments, the BMS can control the regulation temperature of the first temperature regulation apparatus corresponding to the first battery cluster to be less than or equal to the maximum value in the preset temperature range, and the first temperature regulation apparatus is configured to perform temperature decrease regulation on the first battery cluster; or, the BMS can control the regulation temperature of the first temperature regulation apparatus corresponding to the first battery cluster to be larger than or equal to the minimum value in the preset temperature range, and the first temperature regulation apparatus is configured to perform temperature decrease regulation on the first battery cluster.

According to the technical solution of the embodiments, the BMS can directly utilize the minimum value or the maximum value in the preset temperature range to regulate the regulation temperature of the first temperature regulation apparatus of the first battery cluster, and the solution is easy to implement and beneficial for improving the temperature regulation efficiency and the regulation effect of the first temperature regulation apparatus on the first battery cluster.

In some alternative embodiments, the BMS can further control the first temperature regulation apparatus corresponding to the first battery cluster to be at other preset temperature values so as to achieve temperature regulation on the first battery cluster. For example, the BMS can control the regulation temperature of the first temperature regulation apparatus corresponding to the first battery cluster to be less than or equal to the minimum value in the preset temperature range, and the first temperature regulation apparatus is configured to perform temperature decrease regulation on the first battery cluster; or, the BMS can control the regulation temperature of the first temperature regulation apparatus corresponding to the first battery cluster to be larger than or equal to the maximum value in the preset temperature range, and the first temperature regulation apparatus is configured to perform temperature decrease regulation on the first battery cluster. The specific temperature regulation mode is not limited in the embodiments of the present application.

With reference to FIG. 6, in this embodiment of the present application, the temperature control method 600 can include the following steps.

S630: Perform temperature control on each battery cluster according to the difference between the mean temperature of each battery cluster and the target mean temperature. The target mean temperature is the maximum value, the minimum value or the average value of the mean temperatures of the plurality of battery clusters.

**In** this embodiment, the BMS can perform temperature control on each battery cluster according to the difference between the mean temperature of each battery cluster and the target mean temperature. The target mean temperature can represent the overall temperature condition of all the battery clusters in the battery system, for example, under the condition that the target mean temperature is the maximum value of the mean temperature of the plurality of battery clusters, the difference between the mean temperature of each battery cluster and the target mean temperature can represent whether each battery cluster is the high-temperature battery cluster in the plurality of battery clusters or not, and therefore effective temperature regulation on each battery cluster is facilitated.

According to the technical solution of the embodiments, the target mean temperature determined based on the mean temperature of each of the plurality of battery clusters can change along with the overall change of the temperature of the plurality of battery clusters, so that the temperature control can be performed on each battery cluster according to the mean temperature of each battery cluster and the target mean temperature, which realize more accurate and effective temperature control on each battery cluster in the battery system, maintains the temperature uniformity among the clusters, and further improves the overall performance of the battery system.

As an example, in the embodiment shown in FIG. 6, step S630 can be implemented after step S620, or step S630 can also be implemented before step S620. **In** addition, in the embodiment shown in FIG. 6, step S630 is implemented before step S640 and step S650, or, step S630 can also be implemented after step S650. The implementation sequence of step S620, step S630 and step S650 is not specifically limited in this embodiment of the present application.

FIG. 7 is a schematic flow block diagram of another temperature control method 700 provided by an embodiment of the present application The temperature control method 700 is mainly a specific solution for performing temperature control on each battery cluster according to the difference between the mean temperature of each battery cluster and the target mean temperature in step S630.

As shown in FIG. 7, the temperature control method 700 can include the following steps.

S710: Determine the target mean temperature Tmean_t of the plurality of battery clusters according to the mean temperature of each battery cluster.

S720: Determine whether the difference between the mean temperature Tmean_1 of the first battery cluster in the plurality of battery clusters and the target mean temperature Tmean_t is within a third preset range or not.

S730: If yes, determine the high-temperature battery clusters and/or the low-temperature battery clusters in the plurality of battery clusters according to the mean temperature of each battery cluster.

S740: Perform temperature control on the high-temperature battery clusters and/or the low-temperature battery clusters.

S750: If not, perform temperature regulation on the first battery cluster.

Specifically, in this embodiment of the present application, the first battery cluster can be any one of the plurality of battery clusters, and as an example, the mean temperature of the first battery cluster is Tmean_1.

Optionally, in step S720, the BMS can sequentially determine whether the difference between the mean temperature of each of the plurality of battery clusters and the target mean temperature is within the third preset range or not. For example, the BMS can determine whether the difference between the mean temperature Tmean_1 of the first battery cluster in the plurality of battery clusters and the target mean temperature Tmean_t is within the third preset range or not. The first battery cluster can be any one of the plurality of battery clusters.

In some embodiments, the BMS can determine whether the absolute value of the difference between the mean temperature Tmean_1 of the first battery cluster in the plurality of battery clusters and the target mean temperature Tmean_t is less than the preset temperature Th0 or not, in this condition, the third preset range can be [-Th0, Th0], and the preset temperature Th0 is a positive value.

In step S730 and step S740, under the condition that the difference between the mean temperature Tmean_1 of the first battery cluster and the target mean temperature Tmean _t is within the third preset range, the BMS determines the high-temperature battery clusters and/or the low-temperature battery clusters in the plurality of battery clusters according to the mean temperature of each battery cluster, and performs temperature control on the high-temperature battery clusters and/or the low-temperature battery clusters.

Specifically, the specific implementation modes of step S730 and step S740 can refer to the related description of the above embodiments, and will not be listed here.

In step S750, under the condition that the difference between the mean temperature Tmean_1 of the first battery cluster and the target mean temperature Tmean_t is beyond the third preset range, the BMS can perform temperature regulation on the first battery cluster.

Optionally, under the condition that the temperature regulation apparatus is performed for each of the plurality of battery clusters, if the difference between the mean temperature Tmean_1 of the first battery cluster and the target mean temperature Tmean_t is beyond the third preset range, the BMS can transmit the temperature regulation command to the first temperature regulation apparatus corresponding to the first battery cluster, and thus the first temperature regulation apparatus enters a temperature regulation state to regulate the temperature of the first battery cluster.

As an example, the first temperature regulation apparatus can be the water-cooled apparatus corresponding to the first battery cluster, and in the temperature regulation state, the BMS can control and regulate the temperature of water in the water-cooled apparatus, for example, the water is heated or further cooled.

According to the technical solution of this embodiment of the present application, the temperature control or temperature maintaining on any battery cluster can be realized directly based on whether the difference between any one battery cluster (namely the first battery cluster) in the plurality of battery clusters and the target mean temperature is within the third preset range or not, so that the temperature difference among the plurality of battery clusters can be reduced, the technical solution is easy to implement, the reliability is high, and the overall performance of the battery system can be further improved.

Optionally, in some embodiments, under the condition that the difference between the mean temperature Tmean_1 of the first battery cluster in the plurality of battery clusters and the target mean temperature Tmean_t is beyond the third preset range, the BMS can perform temperature regulation on the first battery cluster until the difference between the mean temperature Tmean_1 of the first battery cluster and the mean temperature of other battery clusters in the plurality of battery clusters is within the third preset range.

Optionally, in some embodiments, the BMS can control the regulation temperature of the first temperature regulation apparatus corresponding to the first battery cluster to be the target mean temperature Tmean_t, and the first temperature regulation apparatus is configured to perform temperature regulation on the first battery cluster until the difference between the mean temperature Tmean_1 of the first battery cluster and the mean temperature of other battery clusters in the plurality of battery clusters is within the third preset range.

In the embodiments, the BMS can transmit the temperature regulation command to the first temperature regulation apparatus corresponding to the first battery cluster so that the first temperature regulation apparatus can start a cooling or heating mode, and the temperature regulation command may include: presetting control temperature for the first temperature regulation apparatus, namely the target mean temperature Tmean_t.

As one example, the target mean temperature Tmean_t may be the maximum value Tmean_∞ of the mean temperature of the plurality of battery clusters, and under the condition that the difference between the mean temperature Tmean_1 and Tmean_∞ of the first battery cluster is beyond the third preset range, the temperature of the first battery cluster is low, the BMS can transmit a heating command to the first temperature regulation apparatus so that the first temperature regulation apparatus can start the heating mode; and in the heating command, the control temperature preset for the first temperature regulation apparatus is Tmean_∞.

As another example, the target mean temperature Tmean_t can be the minimum value Tmean_0 of the mean temperature of the plurality of battery clusters, and under the condition that the difference between the mean temperature Tmean_1 and Tmean_0 of the first battery cluster is beyond the third preset range, the temperature of the first battery cluster is high, the BMS can transmit a cooling command to the first temperature regulation apparatus so that the first temperature regulation apparatus can start the cooling mode; and in the cooling command, the control temperature preset for the first temperature regulation apparatus is Tmean_0.

**In** the above embodiments, the first temperature regulation apparatus regulates the temperature of the first battery cluster according to the target mean temperature Tmean_t so as to make the difference between the mean temperature Tmean_1 of the first battery cluster and the target mean temperature Tmean_t within the third preset range.

Optionally, the third preset range can be -5°C to 5°C. Further, the third preset range can be -2°C to 2°C.

According to the technical solution of the embodiments, the regulation temperature of the first temperature regulation apparatus corresponding to the first battery cluster can be controlled to be the target mean temperature, so that the first temperature regulation apparatus can perform effective and relatively accurate regulation on the temperature of the first battery cluster according to the target mean temperature, which makes the mean temperature of the first battery cluster stop to the target mean temperature and maintain within a certain threshold range, thereby effectively reducing the temperature difference between the first battery cluster and other battery clusters, and improving the overall performance of the battery system.

Optionally, in the above embodiments, before the temperature control is performed on the battery clusters in the battery system, for example, in the embodiment shown in FIG. 2, before temperature control is performed on the target battery cluster in the battery system, the temperature control method for a battery system can further include: acquiring electrical parameters of the plurality of battery clusters, and determining that the plurality of battery clusters are in the charging or discharging state according to the electrical parameters.

Specifically, the BMS can collect the electrical parameters of the plurality of battery clusters, and the electrical parameters may be current, voltage, charging capacity, discharging capacity, charging electric quantity, discharging electric quantity and the like. The BMS can determine whether the plurality of battery clusters are in the charging or discharging state or not according to the electrical parameters.

As an example, the BMS can collect the magnitude of current on a bus element of the plurality of battery clusters, and determines that the plurality of battery clusters are in charging state or discharging state or standing state or the like according to the magnitude of the current in the bus element. For example, in the charging process of the plurality of battery clusters, the charging current in the bus element of the plurality of battery clusters can be less than -50 A; and in the discharging process of the plurality of battery clusters, the discharging current in the bus element of the plurality of battery clusters can be larger than 50 A.

As another example, the BMS can continuously read the voltage/charging capacity/discharging capacity over 3 s of the plurality of battery clusters, and determine whether data over 3s are in a continuous ascending or descending state or not, and continuous ascending or descending state indicates that the battery clusters are in charging or discharging.

Under the condition that the BMS determines that the plurality of battery clusters are in the charging or discharging state, the BMS will implement a subsequent temperature control method, namely, the BMS performs temperature control on the target battery cluster in the battery system, or, further performs temperature control on each battery cluster according to the mean temperature of each battery cluster, and even performs temperature control on each battery cluster according to the maximum temperature and/or the minimum temperature of each battery cluster.

According to the technical solution of this embodiment of the present application, the temperature control method for a battery system in the charging or discharging state is provided, and under the condition that the plurality of battery clusters are in the charging or discharging state, the method can be used for determining the target battery cluster among the plurality of battery clusters according to the temperature of the plurality of battery clusters, and performing temperature control on the target battery cluster in a targeted manner, which is conducive to reducing the possibility of large temperature difference among the plurality of battery clusters in the charging and discharging process, and improving the charging and discharging performance of the battery system where the plurality of battery clusters are located.

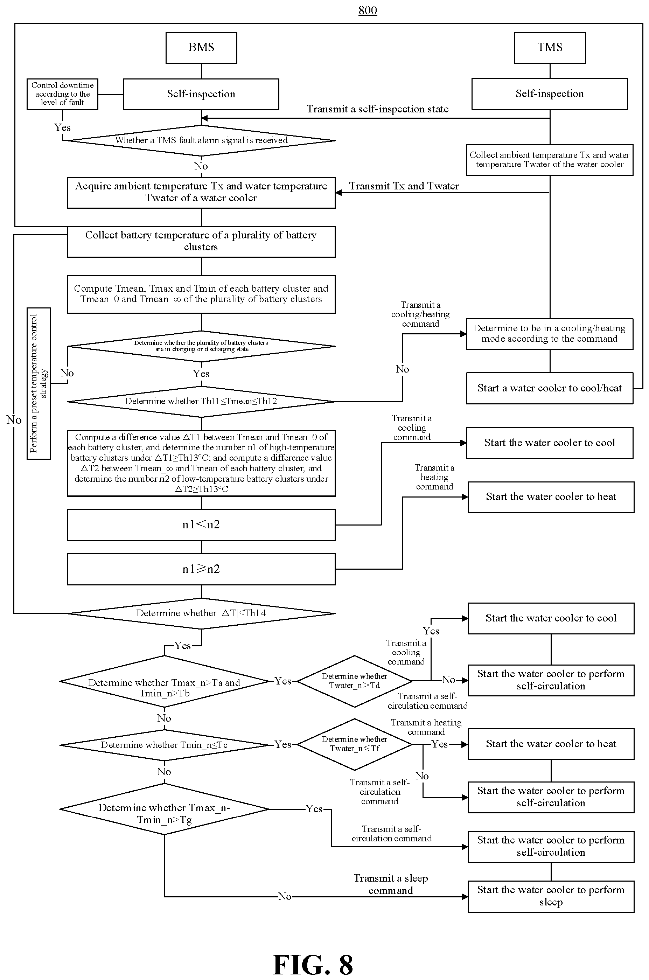

FIG. 8 is a schematic flow block diagram of another temperature control method 800 provided by an embodiment of the present application. The temperature control method 800 relates to a battery management system (BMS) and a thermal management system (TMS), in which, the TMS can be a water-cooled thermal management system, namely, the TMS includes a water cooler and the like. Optionally, a plurality of TMSs can be provided, namely, the plurality of TMS can correspond to the plurality of battery clusters in the battery system one to one.

As shown in FIG. 8, the temperature control method 800 can include the following steps.

Firstly, in the state that the BMS and the TMS are started, the BMS and the TMS can perform self-inspection, and the TMS transmits related self-inspection state to the TMS. In the self-inspection process of the TMS, if fault information is detected, the self-inspection information of the TMS may include a fault alarm signal. The BMS will determine whether the fault alarm signal of the TMS is received or not according to the received self-inspection state of the TMS.

After the BMS receives the fault alarm signal of the TMS, the BMS can control the TMS to stop or perform other actions according to the alarm level in the fault alarm signal.

Under the condition that the BMS does not receive the fault alarm signal of the TMS, the BMS can acquire ambient temperature Tx and water temperature Twater of the water cooler collected by the TMS. The BMS can also acquire the temperature of each battery of the plurality of battery clusters in the battery system.

Further, the BMS can compute the mean temperature Tmean, the maximum temperature Tmax and the minimum temperature Tmin of each battery cluster according to the temperature of each battery of the plurality of battery clusters, in which, Tmean_n can represent the mean temperature of the nth battery cluster in the plurality of battery clusters, Tmax_n can represent the maximum temperature of the nth battery cluster, and Tmin_n can represent the minimum temperature of the nth battery cluster;

Specifically, the nth battery cluster can include m batteries; the temperature of the m batteries can be T_1, T_2...T_m respectively; the mean temperature Tmean_n of the nth battery cluster is shown as Tmean_n=(T_1+T_2+...+T_m)/m; the maximum temperature Tmax_n of the nth battery cluster is shown as Tmax_n=max{T_1+T_2+...+T_m}; and the minimum temperature Tmin_n of the nth battery cluster is shown as Tmin_n=min{T_1+T_2+...+T_m}.

In addition, the BMS can determine the maximum value Tmean_∞ and the minimum value Tmean_0 of the mean temperature of the plurality of battery clusters according to the mean temperature Tmean of the plurality of battery clusters.

Specifically, the battery system can include X battery clusters, the maximum value Tmean_∞ of the mean temperature of the X battery clusters is shown as Tmean_∞= max{Tmean_1+Tmean_2+...Tmean_n...+ Tmean_X}; and the minimum value Tmean_0 of the mean temperature of the X battery clusters is shown as Tmean_0= min{Tmean_1+Tmean_2+... Tmean_n...+ Tmean_X}.

Then, the BMS can determine whether the battery system is in the charging or discharging state currently. For example, the BMS can determine whether the battery system is in the charging or discharging state according to the magnitude of the current in a bus bar of the battery system. In some embodiments, the charging current in the charging process can be less than -50 A, and the discharging current in the discharging process can be larger than 50 A. For another example, the BMS can continuously read the voltage/charging and discharging electric quantity/charging and discharging capacity over 3 s of the battery system, and determine whether data over 3s are in the continuous ascending or descending state or not, and continuous ascending or descending state indicates that the battery system is in the charging or discharging state.

If the battery system is not in the charging or discharging state, the BMS can perform temperature control on the plurality of battery clusters in the battery system by the preset temperature control strategy. For example, according to the difference between the mean temperature of each battery cluster and the maximum value Tmean_∞ or the minimum value Tmean_0 of the mean temperature of the plurality of battery clusters, temperature control is performed on each battery cluster.

If the battery system is in the charging or discharging state, the BMS will determine whether the mean temperature of each of the plurality of battery clusters is within the preset temperature range. As an example, the BMS can determine whether the mean temperature Tmean _ area of the nth battery cluster in the plurality of battery clusters is within the preset temperature range [Th11, Th12] or not.

Under the condition that the mean temperature Tmean_n of the nth battery cluster is beyond the preset temperature range [Th11, Th12], namely, under the condition that Tmean_n<Th11 or Tmean_n>Th12, the BMS will transmit the cooling or heating command for the nth battery cluster to the TMS corresponding to the nth battery cluster, so that the TMS can determine that the nth cell cluster is needed to be enter the cooling or heating mode according to the cooling or heating command, and the TMS starts the water cooler to cool or heat so as to perform temperature decrease regulation or temperature rise regulation on the nth battery cluster.

The cooling or heating command for the nth battery cluster can include preset cooling or heating temperature, in which, the preset cooling temperature may be the temperature less than or equal to Th12, for example, the preset cooling temperature can be less than or equal to the temperature obtained by subtracting 5°C from Th12. The preset heating temperature can be the temperature larger than or equal to Th11, for example, the preset heating temperature can be larger than or equal to the temperature obtained by adding 5°C to Th11.

In some alternative embodiments, the preset cooling temperature can also be other lower temperature, for example, it can be the temperature less than or equal to Th11. Or, the preset cooling temperature can also be other higher temperature, for example, it can be the temperature larger than or equal to Th12.

Optionally, in the process of performing temperature regulation on the nth battery cluster, the BMS can transmit the self-circulation command to the TMS corresponding to other battery clusters, so that the TMS can control the water cooler to perform self-circulation. The mean temperature of the other battery clusters is within the preset temperature range [Th11, Th12].

The temperature control is performed on the plurality of battery clusters in the above manner, so that after the mean temperature of each battery cluster is within the preset temperature range, the BMS can further determine the high-temperature battery clusters and the low-temperature battery clusters in the plurality of battery clusters according to the mean temperature of each of the plurality of battery clusters.

For example, in the embodiment shown in FIG. 8, if the difference between the mean temperature Tmean_n of the nth battery cluster and the minimum value Tmean_0 of the mean temperature of the plurality of battery clusters is larger than or equal to a preset threshold Th13, the nth battery cluster can be determined to be the high-temperature battery cluster, and in this way, the number of high-temperature batteries in the plurality of battery clusters can be determined to be n1. Similarly, if the difference between the maximum value Tmean_n of the mean temperature of the plurality of battery clusters and the mean temperature Tmean_n of the nth battery cluster is larger than or equal to the preset threshold Th13, the nth battery cluster can be determined to be the low-temperature battery cluster, and in this way, the number of low-temperature batteries in the plurality of battery clusters can be determined to be n2. Optionally, the preset threshold Th13 can be designed according to actual needs, as an example, the preset threshold Th13 can be larger than or equal to 2°C.

Or, in other alternative embodiments, other ways can be performed to determine the high-temperature battery clusters and the low-temperature battery clusters in the plurality of battery clusters, for example, the average value Tmean_ave of the mean temperature of the plurality of battery clusters can be determined according to the mean temperature of the plurality of battery clusters; under the condition that the mean temperature Tmean_n of the nth battery cluster is larger than Tmean_ave, the nth battery cluster can be determined to be the high-temperature battery cluster, and correspondingly, under the condition that the mean temperature Tmean_n of the nth battery cluster is less than Tmean_ave, the nth battery cluster can be determined to be the low-temperature battery cluster.

Under the condition that n1 is less than n2, the number of the high-temperature battery clusters in the plurality of battery clusters will be less than that of the low-temperature battery clusters, the phenomenon of "high-temperature outliers" occurs at the moment, the BMS can transmit the cooling command to the TMS corresponding to the high-temperature battery clusters, and the TMS controls the water cooler to cool so as to perform temperature decrease regulation on the high-temperature battery cluster. Under the condition that n1 is larger than or equal to n2, the number of the high-temperature battery clusters in the plurality of battery clusters is larger than or equal to that of the low-temperature battery clusters, the phenomenon of "low-temperature outliers" occurs at the moment, the BMS can transmit the heating command to the TMS corresponding to the low-temperature battery clusters, and the TMS controls the water cooler to heat so as to perform temperature decrease regulation on the low-temperature battery cluster.

Optionally, in the process of performing temperature decrease regulation on the high-temperature battery cluster, the BMS may not transmit the temperature control command to the TMS corresponding to the other battery clusters, namely, temperature control is not performed on the other battery clusters. Or, the BMS may transmit the heating command to the TMS corresponding to the other battery clusters so as to increase the temperature of the other battery clusters to reduce the temperature difference between the high-temperature battery clusters and the other battery clusters.

Optionally, in the process of performing temperature decrease regulation on the other battery clusters, the BMS may transit the heating command to the TMS corresponding to the low-temperature battery cluster, and may not transmit the temperature control command to the TMS, and the low-temperature battery cluster can run to produce heat so as to increase selftemperature. In addition, the BMS can transmit the self-circulation command to the other battery clusters so as to control the temperature of the other battery clusters to be kept within a certain temperature range.

By means of above solution, after temperature regulation is performed on the high-temperature battery clusters and the low-temperature battery clusters in the plurality of battery clusters, whether the absolute value |△T| of the difference between the mean temperature of each of the battery clusters and the minimum value Tmean_0 (or the maximum value Tmean_∞ of the mean temperature of the plurality of battery clusters) of the mean temperature of the battery clusters is less than or equal to a preset threshold Th14 or not can be further determined. The preset threshold Th14 can be designed according to actual needs, and the Th14 can be designed to be small, so that the temperature difference between different battery clusters in the battery system can be reduced. As an example, the Th14 can be less than or equal to 1°C.

Under the condition that |△T|>Th14, the BMS can collect the battery temperature of the plurality of battery clusters again so as to perform temperature control on the plurality battery clusters again until the plurality of battery clusters all meet |ΔT|≤Th14.

Under the condition that |ΔT|≤Th14, the BMS can perform further temperature regulation on each battery cluster according to the maximum temperature and the minimum temperature of each battery cluster.

Specifically, taking the nth battery cluster in the plurality of battery clusters as an example, the BMS can firstly determine whether the maximum temperature Tmax_n of the nth battery cluster is larger than the preset value Ta or not. Optionally, the preset value Ta can be set according to the optimal temperature threshold of the batteries, and the Ta can be 20°C-30°C for example. Further, in this process, the BMS can comprehensively determine whether the maximum temperature Tmax_n of the nth battery cluster is larger than the preset value Ta or not and whether the minimum temperature Tmin_n of the nth battery cluster is larger than the preset value Tb or not. The preset value Tb can also be set according to the optimal temperature threshold of the batteries, and the Tb is less than the Ta, and can also be 20°C-30°C for example.

Under the condition that Tmax_n>Ta and Tmin_n>Tb, the BMS can continuously determine whether the water temperature Twater_n of the water cooler corresponding to the nth battery cluster is larger than a preset value Td or not. For example, the Td is less than the Tb, for example, the Td can be between the value obtained by subtracting 9°C from Tb and the value obtained by subtracting 11°C from Tb.

Under the condition that Twater_n>Td, the BMS can transmit the cooling command to the TMS, and the cooling temperature Tset1_n of the nth battery cluster is set. Tset1_n can be between temperature obtained by subtracting 3°C from Twater_n and temperature obtained by subtracting 5°C from Twater_n. Under the condition that Twater_n<Td, the BMS can transmit the self-circulation command to the TMS, and the self-circulation temperature Tset2_n of the nth battery cluster is set. Tset2_n can be equal to Twater.

Under the condition that Tmax_n≤Ta or Tmin_n≤Tb, the BMS can continuously determine whether the minimum temperature Tmin_n of the nth battery cluster is less than or equal to the preset value Tc. The Tc is less than the preset value Tb, for example, Tc can be between the value obtained by subtracting 3°C from Tb and the value obtained by subtracting 5°C from Tb.

Under the condition that Tmin_n≤Tc, the BMS can continuously determine whether the water temperature Twater_n of the water cooler corresponding to the nth battery cluster is less than or equal to a preset value Tf. Tf is larger than Tc, for example, Tf can be between temperature obtained by adding 14°C to Tc and temperature obtained by subtracting 16°Cfrom Tc.

Under the condition that Twater_n≤Tf, the BMS can transmit the heating command to the TMS, and the heating temperature Tset3_n of the nth battery cluster is set. Tset3_n can be between temperature obtained by adding 3°C to Twater_n and temperature obtained by adding 5°C to Twater_n. Under the condition that Twater_n>Tf, the BMS can transmit the self-circulation command to the TMS, and the self-circulation temperature Tset2_n of the nth battery cluster is set. Tset2_n can be equal to Twater.

Under the condition that Tmin _n>Tc, the BMS can continuously determine whether the difference between the maximum temperature Tmax_n of the nth battery cluster and the minimum temperature Tmin_n is larger than a preset value Tg. For example, Tg can be between 3°C and 5°C.

Under the condition that Tmax_n-Tmin_n>Tg, the BMS can transmit the self-circulation command to the TMS, and the self-circulation temperature Tset2_n of the nth battery cluster is set. Under the condition that Tmax_n-Tmin_n≤Tg, the BMS can transmit a sleep command to the TMS, and the water cooler corresponding to the nth battery cluster can enter the sleep state.

As described above, the temperature control on the nth battery cluster in the plurality of battery clusters is taken as an example, and it is to be understood that the temperature control mode for any one of the plurality of battery clusters can be performed according to the temperature control mode for the nth battery cluster. Optionally, the temperature control on the plurality of battery clusters can be synchronously implemented by the BMS and the plurality of TMSs, so that the parallel temperature control on the plurality of battery clusters is realized.

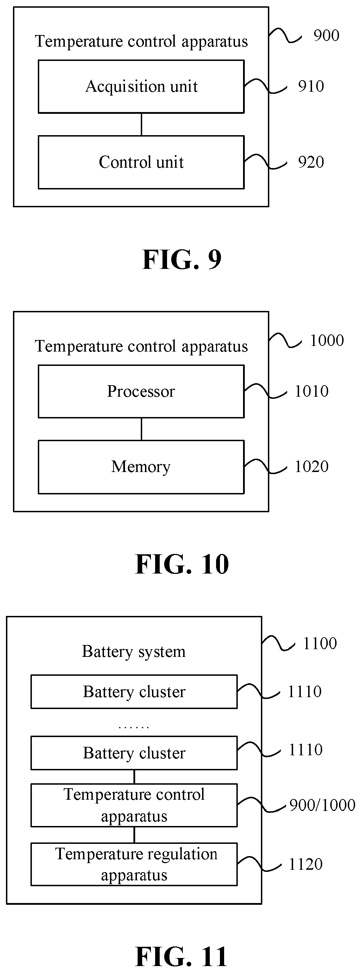

The temperature control method provided by the present application is described in combination with the FIG. 1 to FIG. 8, a temperature control apparatus provided by the present application is described in combination with FIG. 9, the temperature control apparatus in the following can correspond to the temperature control method in the above, the specific technical solution can refer to the specific description of the embodiments of the present application, and in order to be concise, no excessive description are made in the following.

FIG. 9 is a schematic flow block diagram of one temperature control apparatus 900 provided by an embodiment of the present application. Optionally, in some embodiments, the temperature control apparatus 900 can be the BMS.

As shown in FIG. 9, the temperature control apparatus 900 includes: an acquisition unit 910 and a control unit 920. The acquisition unit 910 is configured to acquire the temperature of each of a plurality of battery clusters of the battery system. The control unit 920 is configured to determine a target battery cluster among the plurality of battery clusters according to the temperature of each battery cluster, and perform temperature control on the target battery cluster.

**In** some possible embodiments, the target battery cluster includes: high-temperature battery clusters and/or low-temperature battery clusters, in which, the difference between the temperature of the high-temperature battery clusters and the first target temperature of the plurality of battery clusters meets a first preset condition, the difference between the temperature of the low-temperature battery clusters and the second target temperature of the plurality of battery clusters meets a second preset condition, the first target temperature and the second target temperature are any one selected from the group consisting of the following temperature: the maximum value, the minimum value or the mean value of the temperature of the plurality of battery clusters.

**In** some embodiments, the control unit 920 is specifically configured to: perform temperature decrease regulation on the high-temperature battery clusters under the condition that the number of the high-temperature battery clusters is less than the number of the low-temperature battery clusters; or, perform temperature rise regulation on the low-temperature battery clusters or not performing temperature regulation on the low-temperature battery clusters under the condition that the number of the low-temperature battery clusters is less than or equal to the number of the high-temperature battery clusters.

**In** some embodiments, the control unit 920 is specifically configured to: control the regulation temperature of the temperature regulation apparatuses corresponding to the high-temperature battery clusters and/or the low-temperature battery clusters, the temperature regulation apparatus being configured to perform temperature control on the high-temperature battery clusters and/or the low-temperature battery clusters.

**In** some embodiments, the control unit 920 is specifically configured to: control target regulation temperature of the temperature regulation apparatus corresponding to the high-temperature battery clusters to be the minimum value of the mean temperature of the plurality of battery clusters, the temperature regulation apparatus corresponding to the high-temperature battery clusters being configured to perform temperature decrease regulation on the high-temperature battery clusters, and/or, control the target regulation temperature of the temperature regulation apparatus corresponding to the low-temperature battery clusters to be the maximum value of the temperature of the plurality of battery clusters, the temperature regulation apparatus corresponding to the low-temperature battery clusters being configured to perform temperature rise regulation on the low-temperature battery clusters.

**In** some possible embodiments, the temperature regulation apparatus corresponding to the high-temperature battery clusters is configured to perform temperature decrease regulation on the high-temperature battery clusters so as to make the difference between the mean temperature of the high-temperature battery cluster sand the minimum value of the mean temperature of the plurality of battery clusters within a first preset range; and/or, the temperature regulation apparatus corresponding to the low-temperature battery clusters is configured to perform temperature rise regulation on the low-temperature battery clusters so as to make the difference between the maximum value of the temperature of the plurality of battery clusters and the temperature of the low-temperature battery clusters within a second preset range.

As an example, the first preset range and/or the second preset range are/is between 0°C and 1°C.

In some possible embodiments, the temperature of each battery cluster includes the mean temperature of each battery cluster, and the mean temperature of each battery cluster is the temperature mean value of the batteries in each battery cluster.

In some possible embodiments, the control unit 920 is further configured to: perform temperature control on each battery cluster according to the temperature of each battery cluster.

In some possible embodiments, the temperature of each battery cluster also includes the maximum temperature and/or the minimum temperature of each battery cluster, the maximum temperature of each battery cluster is the maximum temperature value of the batteries in each battery cluster, and the minimum temperature of each battery cluster is the minimum temperature value of the batteries in each battery cluster; and the control unit 920 is configured to: perform temperature control on each battery cluster according to the maximum temperature and/or the minimum temperature of each battery cluster.

In some possible embodiments, the control unit 920 can be specifically configured to: perform temperature decrease regulation on a first battery cluster under the condition that the maximum temperature of the first battery cluster in the plurality of battery clusters is larger than a first preset value.

In some possible embodiments, the acquisition unit 910 is further configured to: acquire regulation temperature of a first temperature regulation apparatus corresponding to the first battery cluster. The control unit 920 is specifically configured to: perform temperature decrease regulation on the first battery cluster according to the regulation temperature of the first temperature regulation apparatus.

In some possible embodiments, the control unit 920 can be specifically configured to: under the condition that the regulation temperature of the first temperature regulation apparatus is larger than the first preset regulation value, control to decrease the regulation temperature of the first temperature regulation apparatus so as to perform temperature decrease regulation on the first battery cluster; or, under the condition that the regulation temperature of the first temperature regulation apparatus is less than or equal to the first preset regulation value, control the first temperature regulation apparatus to perform temperature decrease regulation on the first battery cluster according to the regulation temperature.

In some possible embodiments, the control unit 920 can be specifically configured to: perform temperature rise regulation on the first battery cluster under the condition that the minimum temperature of the first battery cluster in the plurality of battery clusters is less than or equal to a second preset value.

In some possible embodiments, the acquisition unit 910 is further configured to: acquire the regulation temperature of the first temperature regulation apparatus corresponding to the first battery cluster; and the control unit 920 can be specifically configured to: perform temperature rise regulation on the first battery cluster according to the regulation temperature of the first temperature regulation apparatus.

In some possible embodiments, the control unit 920 can be specifically configured to: under the condition that the regulation temperature of the first temperature regulation apparatus is less than or equal to a second preset regulation value, control to rise the regulation temperature of the first temperature regulation apparatus so as to perform temperature rise regulation on the first battery cluster; or, under the condition that the regulation temperature of the first temperature regulation apparatus is larger than the second preset regulation value, control the first temperature regulation apparatus to perform temperature rise regulation on the first battery cluster according to the current regulation temperature.

In some possible embodiments, the control unit 920 can be specifically configured to: under the condition that the difference between the maximum temperature and the minimum temperature of the first battery cluster in the plurality of battery clusters is larger than a third preset value, perform temperature regulation on the first battery cluster; or, under the condition that the difference between the maximum temperature and the minimum temperature of the first battery cluster in the plurality of battery clusters is less than or equal to the third preset value, stop temperature regulation on the first battery cluster.

In some possible embodiments, the temperature of each battery cluster includes: the mean temperature of each battery cluster, and the mean temperature of each battery cluster is the temperature mean value of the batteries in each battery cluster; and the control unit 920 is configured to: perform temperature control on each battery cluster according to the temperature of each battery cluster.

In some possible embodiments, the control unit 920 can be specifically configured to: perform temperature control on each battery cluster according to the mean temperature of each battery cluster and the preset temperature range.

In some possible embodiments, the control unit 920 can be specifically configured to: under the condition that the mean temperature of the first battery cluster in the plurality of battery clusters is larger than the maximum value in the preset temperature range, perform temperature decrease regulation on the first battery cluster so as to make the mean temperature of the first battery cluster within the preset temperature range; or, under the condition that the mean temperature of the first battery cluster in the plurality of battery clusters is less than the minimum value in the preset temperature range, perform temperature rise regulation on the first battery cluster so as to make the mean temperature of the first battery cluster within the preset temperature range.

In some possible embodiments, the control unit 920 can be specifically configured to: control the regulation temperature of the first temperature regulation apparatus corresponding to the first battery cluster to be less than or equal to the maximum value in the preset temperature range, the first temperature regulation apparatus being configured to perform temperature decrease regulation on the first battery cluster so as to make the mean temperature of the first battery cluster within the preset temperature range; or, control the regulation temperature of the first temperature regulation apparatus corresponding to the first battery cluster to be larger than or equal to the minimum value in the preset temperature range, the first temperature regulation apparatus being configured to perform temperature rise regulation on the first battery cluster so as to make the mean temperature of the first battery cluster within the preset temperature range.

In some possible embodiments, the control unit 920 can be specifically configured to: perform temperature control on each battery cluster according to the difference between the mean temperature of each battery cluster and the target mean temperature.

In some possible embodiments, the control unit 920 can be specifically configured to: under the condition that the difference between the mean temperature of the first battery cluster in the plurality of battery clusters and the target mean temperature is within a third preset range, maintain the current temperature of the first battery cluster; or, under the condition that the difference between the mean temperature of the first battery cluster in the plurality of battery clusters and the target mean temperature is beyond the third preset range, perform the temperature regulation on the first battery cluster.

**In** some possible embodiments, the control unit 920 can be specifically configured to: control the regulation temperature of the first temperature regulation apparatus corresponding to the first battery cluster, the first temperature regulation apparatus being configured to perform temperature regulation on the first battery cluster.

**In** some possible embodiments, the control unit 920 can be specifically configured to: control the regulation temperature of the first temperature regulation apparatus corresponding to the first battery cluster to be the target mean temperature, the first temperature regulation apparatus being configured to perform temperature regulation on the first battery cluster according to the target mean temperature.

As an example, the third preset range is between -5°C and 5°C, optionally, the third preset range is between -2°C and 2°C.

In some possible embodiments, the control unit 920 can be specifically configured to: under the condition that the difference between the temperature of the first battery cluster in the plurality of battery clusters and the minimum value of the temperature of the plurality of battery clusters is larger than or equal to a first preset positive value, determine the first battery cluster to be the high-temperature battery cluster; and/or, under the condition that the difference between the maximum value of the temperature of the plurality of battery clusters and the temperature of the second battery cluster in the plurality of battery clusters is larger than or equal to a second preset positive value, determine the second battery cluster to be the low-temperature battery cluster.

In some possible embodiments, the control unit 920 can be specifically configured to: under the condition that the difference between the maximum value of the temperature of the plurality of battery clusters and the temperature of the first battery cluster in the plurality of battery clusters is less than or equal to a third preset positive value, determine the first battery cluster to be the high-temperature battery cluster; and/or, under the condition that the absolute value of the difference between the temperature of the second battery cluster in the plurality of battery clusters and the minimum value of the temperature of the plurality of battery clusters is less than or equal to a fourth preset positive value, determine the second battery cluster to be the low-temperature battery cluster.

In some possible embodiments, the control unit 920 can be specifically configured to: under the condition that the difference between the temperature of the first battery cluster in the plurality of battery clusters and the mean value of the temperature of the plurality of battery clusters is larger than or equal to a fifth preset nonnegative value, determine the first battery cluster to be the high-temperature battery cluster; and/or, under the condition that the difference between the mean value of the temperature of the plurality of battery clusters and the temperature of the second battery cluster in the plurality of battery clusters is larger than or equal to a sixth preset nonnegative value, determine the second battery cluster to be the low-temperature battery cluster.

In some possible embodiments, the acquisition unit 910 is further configured to: acquire electrical parameters of the plurality of battery clusters; and the control unit 920 is further configured to: determine that the plurality of battery clusters are in charging or discharging state according to the electrical parameters.

In some possible embodiments, the control unit 920 includes: a communication interface which is configured to transmit the temperature control command too the temperature regulation apparatus corresponding to the target battery cluster so that the temperature regulation apparatus can perform temperature control on the target battery cluster according to the temperature control command.

In some possible embodiments, the temperature regulation apparatus contains a fluid which is used for regulating the temperature of the target battery cluster.

FIG. 10 is a schematic flow block diagram of another temperature control apparatus 1000 provided by an embodiment of the present application. Optionally, in some embodiments, the temperature control apparatus 1000 can be the BMS.

As shown in FIG. 10, the temperature control apparatus 1000 can include a processor 1010 and a memory 1020, the storage 1020 is configured to store a computer program, and the processor 1010 is configured to call and run the computer program stored in the memory to execute: the temperature control method for a battery system in any embodiment above.

FIG. 11 is a schematic flow block diagram of a battery system 1100 provided by an embodiment of the present application.

As shown in FIG. 11, the battery system 1100 includes: a plurality of battery clusters 1110, and the temperature control apparatus 900 or the temperature control apparatus 1000 in the above embodiment shown in FIG. 9 or FIG. 10, and the temperature control apparatus 900 or the temperature control apparatus 1000 can be configured to perform temperature control on the battery clusters in the plurality of battery clusters 1010.

Optionally, the battery system 1100 further includes: a temperature regulation apparatus 1120; the temperature control apparatus 900 or the temperature control apparatus 1000 is configured to transmit a temperature control command to the temperature regulation apparatus 1120, so that the temperature regulation apparatus 1120 can control the temperature of a battery cluster according to the temperature control command.

In some specific embodiments, the temperature control apparatus 900 or the temperature control apparatus 1000 can be the BMS, and the temperature regulation apparatus 1120 can be the TMS.

Optionally, a plurality of temperature regulation apparatuses 1120 can be provided and can correspond to the plurality of battery clusters 1110 one by one.

Optionally, the battery system 1100 provided by the embodiment of the present application can be a power system or an energy storage system.

An embodiment of the present application further provides a computer-readable medium which is configured to store a computer program, and the computer program runs in a computer device to perform the temperature control method for a battery system in any embodiment above.

An embodiment of the present application further provides a computer program product including a computer program, and the computer program runs in a computer device to perform the temperature control method for a battery system in any embodiment above.

An embodiment of the present application further provides a chip, and the chip includes a processor and a data interface, in which, the processor reads instructions stored in a memory through the data interface so as to implement the temperature control method for a battery system in any embodiment above.

Optionally, the computer readable medium, the computer program product and the chip can be applied to a temperature control apparatus, and the temperature control apparatus can be the BMS.

It is to be understood that the specific examples herein are only intended to help those skilled in the art better understand the embodiments of the present application, and are not intended to limit the scope of the embodiments of the present application.

It is also to be understood that in the various embodiments of the of this application, the magnitude of the sequence numbers of the above processes does not imply the order of execution. The execution order of each process is to be determined based on its function and internal logic, and does not constitute any restrictions on the implementation process of the embodiment of this application.

Those of ordinary skill in the art may notice that the exemplary modules or units and algorithm steps described with reference to the embodiments disclosed in this specification can be implemented in electronic hardware, or a combination of computer software and electronic hardware. Whether the functions are executed in a mode of hardware or software depends on particular applications and design constraint conditions of the technical solutions. Those skilled in the art can use different methods to implement the described functions for each particular application, but it should not be considered that the implementation goes beyond the scope of the embodiments of the present disclosure.

Although the present application is described with reference to the preferred embodiments, without departing from the scope of the present application, various improvements may be made to it and parts therein may be replaced with equivalents. In particular, the technical features mentioned in the various embodiments can be combined in any manner as long as there is no structural conflict. The present application is not limited to the particular embodiments disclosed herein, but rather includes all technical solutions falling within the scope of the claims.

## Claims

1. A temperature control method for a battery system, comprising:
acquiring the temperature of each of a plurality of battery clusters of the battery system;
determining a target battery cluster among the plurality of battery clusters according to the temperature of each battery cluster; and
performing temperature control on the target battery cluster.

2. The temperature control method according to claim 1, wherein the target battery cluster comprises: high-temperature battery clusters and/or low-temperature battery clusters, in which, the difference between the temperature of the high-temperature battery clusters and the first target temperature of the plurality of battery clusters meets a first preset condition, the difference between the temperature of the low-temperature battery clusters and the second target temperature of the plurality of battery clusters meets a second preset condition, the first target temperature comprises any one selected from the group consisting of the following temperature: the maximum value, the minimum value or the mean value of the temperature of the plurality of battery clusters, and the second target temperature comprises any one selected from the group consisting of the following temperature: the maximum value, the minimum value or the mean value of the temperature of the plurality of battery clusters.

3. The temperature control method according to claim 2, wherein the performing temperature control on the target battery cluster comprises:
performing temperature decrease regulation on the high-temperature battery clusters under the condition that the number of the high-temperature battery clusters is less than the number of the low-temperature battery clusters; or,
performing temperature rise regulation on the low-temperature battery clusters or not performing temperature regulation on the low-temperature battery clusters under the condition that the number of the low-temperature battery clusters is less than or equal to the number of the high-temperature battery clusters.

4. The temperature control method according to claim 3, wherein performing temperature decrease regulation on the high-temperature battery clusters comprises:
controlling the target regulation temperature of a temperature regulation apparatus corresponding to the high-temperature battery clusters to be the minimum value of the temperature of the plurality of battery clusters, the temperature regulation apparatus corresponding to the high-temperature battery clusters being configured to perform temperature decrease regulation on the high-temperature battery clusters; or,
the performing temperature rise regulation on the low-temperature battery clusters comprises:
controlling the target regulation temperature of a temperature regulation apparatus corresponding to the low-temperature battery clusters to be the maximum value of the temperature of the plurality of battery clusters, the temperature regulation apparatus corresponding to the low-temperature battery clusters being configured to perform temperature rise regulation on the low-temperature battery clusters.

5. The temperature control method according to claim 4, wherein the temperature regulation apparatus corresponding to the high-temperature battery clusters is configured to perform temperature decrease regulation on the high-temperature battery clusters so as to make the difference between the temperature of the high-temperature battery clusters and the minimum value of the temperature of the plurality of battery clusters within a first preset range; or,
the temperature regulation apparatus corresponding to the low-temperature battery clusters is configured to perform temperature rise regulation on the low-temperature battery clusters so as to make the difference between the maximum value of the temperature of the plurality of battery clusters and the temperature of the low-temperature battery clusters within a second preset range.

6. The temperature control method according to claim 5, wherein the first preset range and/or the second preset range are/is between 0°C and 1°C.

7. The temperature control method according to any one of claims 1 to 6, wherein the temperature of each battery cluster comprises the mean temperature of each battery cluster, and the mean temperature of each battery cluster is the temperature mean value of batteries in each battery cluster.

8. The temperature control method according to any one of claims 1 to 7, further comprising:
performing temperature control on each battery cluster according to the temperature of each battery cluster.

9. The temperature control method according to claim 8, wherein the temperature of each battery cluster comprises the maximum temperature and/or the minimum temperature of each battery cluster, the maximum temperature of each battery cluster is the maximum temperature value of the batteries in each battery cluster, and the maximum temperature of each battery cluster is the minimum temperature value of the batteries in each battery cluster; and
the performing temperature control on each battery cluster according to the temperature of each battery cluster comprises:
performing temperature control on each battery cluster according to the maximum temperature and/or the minimum temperature of each battery cluster.

10. The temperature control method according to claim 9, wherein the performing temperature control on each battery cluster according to the maximum temperature and/or the minimum temperature of each battery cluster comprises:
performing temperature decrease regulation on a first battery cluster under the condition that the maximum temperature of the first battery cluster in the plurality of battery clusters is larger than a first preset value.

11. The temperature control method according to claim 10, wherein the performing temperature decrease regulation on a first battery cluster comprises:
acquiring regulation temperature of a first temperature regulation apparatus corresponding to the first battery cluster; and
performing temperature decrease regulation on the first battery cluster according to the regulation temperature of the first temperature regulation apparatus.

12. The temperature control method according to claim 11, wherein the performing temperature decrease regulation on the first battery cluster according to the regulation temperature of the first temperature regulation apparatus comprises:
under the condition that the regulation temperature of the first temperature regulation apparatus is larger than the first preset regulation value, controlling to decrease the regulation temperature of the first temperature regulation apparatus so as to perform temperature decrease regulation on the first battery cluster; or,
under the condition that the regulation temperature of the first temperature regulation apparatus is less than or equal to the first preset regulation value, controlling the first temperature regulation apparatus to perform temperature decrease regulation on the first battery cluster according to the regulation temperature.

13. The temperature control method according to any one of claims 9 to 12, wherein the performing temperature control on each battery cluster according to the maximum temperature and/or the minimum temperature of each battery cluster comprises:
performing temperature rise regulation on the first battery cluster under the condition that the minimum temperature of the first battery cluster in the plurality of battery clusters is less than or equal to a second preset value.

14. The temperature control method according to claim 13, wherein the performing temperature rise regulation on the first battery cluster comprises:
acquiring regulation temperature of a first temperature regulation apparatus corresponding to the first battery cluster; and
performing temperature rise regulation on the first battery cluster according to the regulation temperature of the first temperature regulation apparatus.

15. The temperature control method according to claim 14, wherein the performing temperature rise regulation on the first battery cluster according to the regulation temperature of the first temperature regulation apparatus comprises:
under the condition that the regulation temperature of the first temperature regulation apparatus is less than or equal to a second preset regulation value, controlling to rise the regulation temperature of the first temperature regulation apparatus so as to perform temperature rise regulation on the first battery cluster; or,
under the condition that the regulation temperature of the first temperature regulation apparatus is larger than the second preset regulation value, controlling the first temperature regulation apparatus to perform temperature rise regulation on the first battery cluster according to the regulation temperature.

16. The temperature control method according to any one of claims 9 to 15, wherein the performing temperature control on each battery cluster according to the maximum temperature and/or the minimum temperature of each battery cluster comprises:
under the condition that the difference between the maximum temperature and the minimum temperature of the first battery cluster in the plurality of battery clusters is larger than a third preset value, performing temperature regulation on the first battery cluster; or,
under the condition that the difference between the maximum temperature and the minimum temperature of the first battery cluster in the plurality of battery clusters is less than or equal to the third preset value, stopping temperature regulation on the first battery cluster.

17. The temperature control method according to any one of claims 8 to 16, wherein the temperature of each battery cluster comprises: the mean temperature of each battery cluster, and the mean temperature of each battery cluster is the temperature mean value of the batteries in each battery cluster; and
the performing temperature control on each battery cluster according to the temperature of each battery cluster comprises: performing temperature control on each battery cluster according to the mean temperature of each battery cluster.

18. The temperature control method according to claim 17, wherein the performing temperature control on each battery cluster according to the mean temperature of each battery cluster comprises:
performing temperature control on each battery cluster according to the mean temperature of each battery cluster and the preset temperature range.

19. The temperature control method according to claim 18, wherein the performing temperature control on each battery cluster according to the mean temperature of each battery cluster and the preset temperature range comprises:
under the condition that the mean temperature of the first battery cluster in the plurality of battery clusters is larger than the maximum value in the preset temperature range, performing temperature decrease regulation on the first battery cluster so as to make the mean temperature of the first battery cluster within the preset temperature range; or,
under the condition that the mean temperature of the first battery cluster in the plurality of battery clusters is less than the minimum value in the preset temperature range, performing temperature rise regulation on the first battery cluster so as to make the mean temperature of the first battery cluster within the preset temperature range.

20. The temperature control method according to claim 19, wherein the performing temperature decrease regulation on the first battery cluster so as to make the mean temperature of the first battery cluster within the preset temperature range comprises:
controlling the regulation temperature of the first temperature regulation apparatus corresponding to the first battery cluster to be less than or equal to the maximum value in the preset temperature range, the first temperature regulation apparatus being configured to perform temperature decrease regulation on the first battery cluster so as to make the mean temperature of the first battery cluster within the preset temperature range; or,
the performing temperature rise regulation on the first battery cluster so as to make the mean temperature of the first battery cluster within the preset temperature range comprises:
controlling the regulation temperature of the first temperature regulation apparatus corresponding to the first battery cluster to be larger than or equal to the minimum value in the preset temperature range, the first temperature regulation apparatus being configured to perform temperature rise regulation on the first battery cluster so as to make the mean temperature of the first battery cluster within the preset temperature range.

21. The temperature control method according to any one of claims 17 to 20, wherein the performing temperature control on each battery cluster according to the mean temperature of each battery cluster comprises:
performing temperature control on each battery cluster according to the difference between the mean temperature of each battery cluster and the target mean temperature, wherein the target mean temperature is the maximum value, the minimum value or the mean value of the mean temperature of the plurality of battery clusters.

22. The temperature control method according to claim 21, wherein the performing temperature control on each battery cluster according to the difference between the mean temperature of each battery cluster and the target mean temperature comprises:
under the condition that the difference between the mean temperature of the first battery cluster in the plurality of battery clusters and the target mean temperature is within a third preset range, maintaining the current temperature of the first battery cluster; or,
under the condition that the difference between the mean temperature of the first battery cluster in the plurality of battery clusters and the target mean temperature is beyond the third preset range, performing the temperature regulation on the first battery cluster.

23. The temperature control method according to claim 22, wherein the performing temperature regulation on the first battery cluster comprises:
controlling the regulation temperature of the first temperature regulation apparatus corresponding to the first battery cluster, the first temperature regulation apparatus being configured to perform temperature regulation on the first battery cluster.

24. The temperature control method according to claim 23, wherein the controlling the regulation temperature of the first temperature regulation apparatus corresponding to the first battery cluster, the first temperature regulation apparatus being configured to perform temperature regulation on the first battery cluster comprises:
controlling the regulation temperature of the first temperature regulation apparatus corresponding to the first battery cluster to be the target mean temperature, the first temperature regulation apparatus being configured to perform temperature regulation on the first battery cluster according to the target mean temperature.

25. The temperature control method according to any one of claims 2 to 24, wherein the first target temperature is the minimum value of the temperature of the plurality of battery clusters, and the second target temperature is the maximum value of the temperature of the plurality of battery clusters; and
the determining the target battery cluster among the plurality of battery clusters according to the temperature of each battery cluster comprises:
under the condition that the difference between the temperature of the first battery cluster in the plurality of battery clusters and the minimum value of the temperature of the plurality of battery clusters is larger than or equal to a first preset positive value to meet a first preset condition, determining the first battery cluster to be the target battery cluster, the target battery cluster being the high-temperature battery cluster; and/or,
under the condition that the difference between the maximum value of the temperature of the plurality of battery clusters and the temperature of the second battery cluster in the plurality of battery clusters is larger than or equal to a second preset positive value to meet a second preset condition, determining the second battery cluster to be the target battery cluster, the target battery cluster being the low-temperature battery cluster.

26. The temperature control method according to any one of claims 2 to 24, wherein the first target temperature is the maximum value of the temperature of the plurality of battery clusters, and the second target temperature is the minimum value of the temperature of the plurality of battery clusters; and
the determining the target battery cluster among the plurality of battery clusters according to the temperature of each battery cluster comprises:
under the condition that the difference between the maximum value of the temperature of the plurality of battery clusters and the temperature of the first battery cluster in the plurality of battery clusters is less than or equal to a third preset positive value to meet the first preset condition, determining the first battery cluster to be the target battery cluster, the target battery cluster being the high-temperature battery cluster; and/or,
under the condition that the absolute value of the difference between the temperature of a second battery cluster in the plurality of battery clusters and the minimum value of the temperature of the plurality of battery clusters is less than or equal to a fourth preset positive value to meet the second preset condition, determining the second battery cluster to be the target battery cluster, the target battery cluster being the low-temperature battery cluster.

27. The temperature control method according to any one of claims 2 to 24, wherein the first target temperature and the second target temperature are both mean values of the temperature of the plurality of battery clusters; and
the determining the target battery cluster among the plurality of battery clusters according to the temperature of each battery cluster comprises:
under the condition that the difference between the temperature of the first battery cluster in the plurality of battery clusters and the mean value of the temperature of the plurality of battery clusters is larger than or equal to a fifth preset nonnegative value to meet the first preset condition, determining the first battery cluster to be the target battery cluster, the target battery cluster being the high-temperature battery cluster; and/or,
under the condition that the difference between the mean value of the temperature of the plurality of battery clusters and the temperature of the second battery cluster in the plurality of battery clusters is larger than or equal to a sixth preset nonnegative value to meet the second preset condition, determining the second battery cluster to be the target battery cluster, the target battery cluster being the low-temperature battery cluster.

28. The temperature control method according to any one of claims 1 to 27, wherein before performing temperature control on the target battery cluster, the temperature control method further comprises:
acquiring electrical parameters of the plurality of battery clusters; and
determining that the plurality of battery clusters are in a charging or discharging state according to the electrical parameters.

29. The temperature control method according to any one of claims 1 to 28, wherein the temperature control method is applied to a BMS; and the performing temperature control on the target battery cluster comprises:
the BMS transmitting a temperature control command to a temperature regulation system corresponding to the battery system, and then the temperature regulation system performing temperature control on the target battery cluster according to the temperature control command.

30. The temperature control method according to claim 29, wherein the temperature regulation system contains a fluid which is used for regulating the temperature of the target battery cluster.

31. A temperature control apparatus for a battery system, comprising:
an acquisition unit configured to acquire the temperature of each of a plurality of battery clusters of the battery system; and
a control unit configured to determine a target battery cluster among the plurality of battery clusters according to the temperature of each battery cluster, and
perform temperature control on the target battery cluster.

32. The temperature control apparatus according to claim 31, wherein the target battery cluster comprises: high-temperature battery clusters and/or low-temperature battery clusters, in which, the difference between the temperature of the high-temperature battery clusters and the first target temperature of the plurality of battery clusters meets a first preset condition, the difference between the temperature of the low-temperature battery clusters and the second target temperature of the plurality of battery clusters meets a second preset condition, the first target temperature is any one selected from the group consisting of the following temperature: the maximum value, the minimum value or the mean value of the temperature of the plurality of battery clusters, and the second target temperature is any one selected from the group consisting of the following temperature: the maximum value, the minimum value or the mean value of the temperature of the plurality of battery clusters.

33. The temperature control apparatus according to claim 32, wherein the control unit is configured to:
perform temperature decrease regulation on the high-temperature battery clusters under the condition that the number of the high-temperature battery clusters is less than the number of the low-temperature battery clusters; or,
perform temperature rise regulation on the low-temperature battery clusters or not performing temperature regulation on the low-temperature battery clusters under the condition that the number of the low-temperature battery clusters is less than or equal to the number of the high-temperature battery clusters.

34. The temperature control apparatus according to claim 33, wherein the control unit is configured to:
control the target regulation temperature of a temperature regulation apparatus corresponding to the high-temperature battery clusters to be the minimum value of the mean temperature of the plurality of battery clusters, the temperature regulation apparatus corresponding to the high-temperature battery clusters being configured to perform temperature decrease regulation on the high-temperature battery clusters; or,
control the target regulation temperature of a temperature regulation apparatus corresponding to the low-temperature battery clusters to be the maximum value of the temperature of the plurality of battery clusters, the temperature regulation apparatus corresponding to the low-temperature battery clusters being configured to perform temperature rise regulation on the low-temperature battery clusters.

35. The temperature control apparatus according to claim 34, wherein the temperature of each battery cluster comprises the mean temperature of each battery cluster, and the mean temperature of each battery cluster is the temperature mean value of batteries in each battery cluster.

36. The temperature control apparatus according to any one of claims 31 to 35, wherein the control unit is further configured to: perform temperature control on each battery cluster according to the temperature of each battery cluster; and the temperature of each battery cluster comprises the maximum temperature and/or the minimum temperature of each battery cluster, the maximum temperature of each battery cluster is the maximum temperature value of the batteries in each battery cluster, and the maximum temperature of each battery cluster is the minimum temperature value of the batteries in each battery cluster.

37. The temperature control apparatus according to any one of claims 31 to 36, wherein the acquisition unit is further configured to: acquire electrical parameters of the plurality of battery clusters; and
the control unit is further configured to: determine that the plurality of battery clusters are in a charging or discharging state according to the electrical parameters.

38. The temperature control apparatus according to any one of claims 31 to 37, wherein the control unit comprises: a communication interface which is configured to transmit a temperature control command to the temperature regulation apparatus corresponding to the target battery cluster so that the temperature regulation apparatus can perform temperature control on the target battery cluster according to the temperature control command.

39. The temperature control apparatus according to claim 38, wherein the temperature regulation system contains a fluid which is used for regulating the temperature of the target battery cluster.

40. A temperature control apparatus for a battery system, comprising: a processor and a memory, wherein the memory is configured to store a computer program, and the processor is configured to call and run the computer program stored in the memory to execute the temperature control method for a battery system according to any one of claims 1 to 30.

41. A battery system, comprising:
a plurality of battery clusters; and
the temperature control apparatus according to any one of claims 31 to 40, wherein the temperature control apparatus is configured to perform temperature control on the target battery cluster among the plurality of battery clusters.

42. The battery system according to claim 41, further comprising: a temperature regulation apparatus, wherein
the temperature regulation apparatus is configured to transmit a temperature control command to the temperature regulation apparatus corresponding to the target battery cluster so that the temperature regulation apparatus can perform temperature control on the target battery cluster according to the temperature control command.
